# EUROPÄISCHE PATENTSCHRIFT

(11) **EP 2 243 711 B1**
(45) Veröffentlichungstag und Bekanntmachung des Hinweises auf die Patenterteilung: **11.07.2012**
(21) Anmeldenummer: 09158518.2
(22) Anmeldetag: 22.04.2009
(51) Int. Cl.: B65C 9/18, B31D 1/02, B65C 9/42, B65C 9/44, B65H 23/188

(54) **Herstellung von Bandware mit diagnostischen Hilfsmitteln**
Manufacturing tape products with diagnostic item
Fabrication de produits en ruban avec des moyens diagnostiques

(43) Veröffentlichungstag der Anmeldung: 27.10.2010
(73) Patentinhaber: Roche Diagnostics GmbH, 68305 Mannheim (DE); F. Hoffmann-La Roche AG, 4070 Basel (CH)
(72) Erfinder: Dagenbach, Ralf, 68723 Schwetzingen (DE); Hofstadt, Ronald, 67459 Boehl-Iggelheim (DE); Lurg, Klaus, 68642 Bürstadt (DE); Pflaesterer, Stefan, 69469 Weinheim (DE); Schwoebel, Wolfgang, 68309 Mannheim (DE); Voelschow, Eric, 68307 Mannheim (DE); Renz, Thomas, 70435 Stuttgart (DE); Sprung, Ulf, 73271 Holzmaden (DE); Lamparter, Matthias, 72555 Metzingen (DE)
(74) Vertreter: Stößel, Matthias

(56) Entgegenhaltungen:
- EP-A- 1 593 434
- US-A1- 2002 162 617
- US-A1- 2006 144 521

## Beschreibung

### Gebiet der Erfindung

Die Erfindung betrifft ein Verfahren zur Herstellung eines Analysebands für Flüssigkeitsproben, insbesondere Körperflüssigkeiten. Die Erfindung betrifft weiterhin eine Vorrichtung zur Herstellung eines Analysebands für Flüssigkeitsproben, insbesondere unter Verwendung eines erfindungsgemäßen Verfahrens. Derartige Verfahren und Vorrichtungen werden allgemein beispielsweise eingesetzt, um Bandware herzustellen, welche diagnostische Hilfsmittel, beispielsweise diagnostische Hilfsmittel für einen einmaligen Gebrauch, umfasst. Derartige diagnostische Hilfsmittel können insbesondere ein oder mehrere Testfelder einer Nachweischemie zum qualitativen und/oder quantitativen Nachweis mindestens eines Analyten in der Körperflüssigkeit und/oder Lanzetten zum Gewinnen einer Flüssigkeitsprobe einer Körperflüssigkeit umfassen, wie sie beispielsweise im Rahmen der Diabetes-Diagnostik eingesetzt werden. Auch andere Anwendungsgebiete und/oder andere Arten diagnostischer Hilfsmittel sind jedoch denkbar.

### Stand der Technik

Die Untersuchungen von Blutproben oder anderen Proben von Körperflüssigkeiten, wie beispielsweise interstitieller Flüssigkeit, ermöglichen in der klinischen Diagnostik das frühzeitige und zuverlässige Erkennen von pathologischen Zuständen sowie die gezielte und fundierte Kontrolle von Körperzuständen. Die medizinische Diagnostik setzt in der Regel die Gewinnung einer Probe aus Blut oder interstitieller Flüssigkeit des zu untersuchenden Patienten voraus. Zur Gewinnung der Probe kann die Haut der zu untersuchenden Person, beispielsweise an der Fingerbeere oder dem Ohrläppchen, mit Hilfe einer sterilen, spitzen oder scharfen Lanzette perforiert werden, um so beispielsweise einige wenige Mikroliter Blut oder weniger für die Analyse zu gewinnen. Insbesondere eignet sich diese Methode für eine Analyse der Probe, die unmittelbar nach der Probengewinnung durchgeführt wird. Vor allem im Bereich des so genannten "Home Monitoring", also dort, wo medizinische Leihen selbst einfache Analysen des Bluts oder der interstitiellen Flüssigkeit durchführen, dort insbesondere für die regelmäßige, mehrmals täglich durchzuführende Blutgewinnung durch Diabetiker für die Kontrolle der Blutglucosekonzentration, werden Lanzetten und passende Geräte, so genannte Stechhilfen, angeboten. Diese sind beispielsweise in WO-A 98/48695, US 4,442,836, US 5,554,166 oder WO 2006/013045 A1 beschrieben.

Die eigenhändige Blutzuckerbestimmung ist heute eine weltweit verbreitete Methode in der Diabetes-Kontrolle. Blutzuckergeräte im Stand der Technik weisen in der Regel ein Analysegerät auf, in das ein Testelement (zum Beispiel ein Teststreifen oder ein Analyseband) eingebracht wird. Die zu analysierende Probe wird auf ein Testfeld des Testelements aufgebracht und reagiert in dem Testfeld gegebenenfalls mit einer oder mehreren Reagenzien, bevor sie analysiert wird. Die optische, insbesondere photometrische, und die elektrochemische Auswertung von Testelementen stellen die gebräuchlichsten Verfahren zur schnellen Bestimmung der Konzentration von Analyten in Proben dar. Analysesysteme mit Testelementen zur Probeanalyse werden allgemein im Bereich der Analytik, der Umweltanalytik und vor allem im Bereich der medizinischen Diagnostik eingesetzt. Insbesondere im Bereich der Blutglucosediagnostik aus Kapillarblut besitzen Testelemente, die photometrisch oder elektrochemisch ausgewertet werden, einen großen Stellenwert.

Aus dem Stand der Technik sind verschiedene Formen von Testelementen und Testgeräte zu deren Auswertung bekannt. Beispielsweise lassen sich streifenförmige Testelemente einsetzen, wie zum Beispiel in den Dokumenten CA 2311496 A1, US 5,846,838 A, US 6,036,919 A oder WO 97/02487 beschrieben sind. Weitere im Stand der Technik bekannte mehrschichtige Testelemente sind Analysebänder mit einer Vielzahl von Testfeldern, die in einer Kassette aufgewickelt zur Verwendung in einem Analysegerät bereitgestellt werden. Solche Kassetten und Analysebänder werden beispielsweise in den Dokumenten DE 10 332 488 A1, DE 10 343 896 A1, EP 1 424 040 A1, WO 2004/056269 A1 oder US 2006/0002816 A1 beschrieben. Neben Analysebändern mit Testfeldern sind mittlerweile auch Analysebänder bekannt, bei welchen Lanzetten auf einem Trägerband angeordnet sind, wobei sich die einzelnen Lanzetten durch Bandtransport sukzessive zum Einsatz bringen und auch wieder entsorgen lassen. Ein Beispiel eines derartigen Systems ist in WO-A 2005/107596 gezeigt. Im Folgenden wird daher unter einem Analyseband allgemein ein Band mit einer beliebigen Art diagnostischer Hilfsmittel verstanden, wobei die diagnostischen Hilfsmittel eine beliebige Art diagnostischer Hilfsmittel umfassen können, beispielsweise diagnostische Testfelder mit einer Nachweischemie und/oder Lanzetten. Unter einem Band kann, neben einem kontinuierlichen, streifenförmigen Element, grundsätzlich allgemein ein beliebiges Transportelement verstanden werden, welches zumindest teilweise biegbar, verformbar oder flexibel ausgestaltet ist und welches beispielsweise auch in Form einer Kette, einer Schnur, einer Gliederkette oder eines ähnlichen kontinuierlichen Trägers ausgestaltet sein kann.

Zur Herstellung der Analysebänder sind aus dem Stand der Technik verschiedene Verfahren bekannt. Diese Verfahren müssen zahlreichen strengen Anforderungen genügen, da im Bereich der medizinischen Diagnostik strenge Erfordernisse beispielsweise an die Kontaminationsfreiheit der Analysebänder gestellt werden, sowie hohe Anforderungen an die Qualität und die Reproduzierbarkeit der auf den Analysebändern aufgebrachten diagnostischen Hilfsmittel. Gleichzeitig müssen die Analysebänder jedoch kostengünstig hergestellt werden, da die medizinische Diagnostik unter einem stetig wachsenden Kostendruck steht.

Aus EP 1 593 434 A2 sind ein Verfahren und eine Vorrichtung zur Herstellung eines Analysebands für Flüssigkeitsproben bekannt. Dabei wird ein aufrollbares Transportband mit einer Vielzahl von in Bandrichtung im Abstand voneinander befindlichen Testfeldern zur Analyse der Flüssigkeitsprobe versehen. Dazu wird ein mehrlagiges Testetikettenband zumindest aus einem Nachweisfilm und einem Klebeband vorgefertigt und anschließend die Testfelder als selbstklebende Testetiketten von dem Testetikettenband auf das Transportband übertragen. Hierzu wird vorgeschlagen, ein Vielspur-Etikettenband durch Stanzen und Abziehen eines Stanzgitters abschnittsweise in Vielfach-Testetiketten zu unterteilen, welche anschließend in einem Etikettierverfahren auf das Transportband übertragen werden. Dieses bekannte Verfahren ermöglicht eine kostengünstigere und präzise Herstellung von Analysebändern hoher Qualität. Dabei hat es sich jedoch im praktischen Einsatz gezeigt, dass das in EP 1 593 434 A2 beschriebene Analyseverfahren vom Durchsatz her beschränkt ist, sodass es bei Bandgeschwindigkeit des Trägerbandes von mehreren zehn Metern pro Minute zur Toleranzen in der Etikettierung kommen kann, welche die vorgegebenen Maximaltoleranzen überschreiten können.

Aus dem Stand der Technik sind zahlreiche weitere Etikettierverfahren aus dem Bereich von Medizinprodukten oder nichtmedizinischen Produkten bekannt. So beschreibt beispielsweise die nachveröffentlichte PCT-Anmeldung mit der Anmeldenummer PCT/EP 2008/064614 ein Verfahren zur Herstellung eines Analysebandes für Flüssigkeitsproben, bei welchem ein Laminatband mit einem Laminatträgerband und mindestens einer diagnostischen Funktionsschicht derart geschnitten wird, dass ein diagnostisches Hilfsetikett entsteht. Dieses wird auf eine Vakuumwalze übertragen und von dieser auf ein Trägerband übertragen.

Aus US 2003/0111184 A1 ist eine Vorrichtung zum Transferieren eines diskreten Abschnitts eines ersten Bandes auf ein zweites Band, welches mit unterschiedlicher Geschwindigkeit laufen kann, bekannt. Dabei wird ein diskreter Abschnitt des ersten Bandes erzeugt und auf eine Transferrolle übertragen, die sich mit der Geschwindigkeit des ersten Bandes dreht. Diese Transferrolle ist eine Vakuumrolle, welche den Abschnitt auf eine Zweittransferrolle überträgt, die ebenfalls eine Vakuumrolle ist und sich mit der Rotationsgeschwindigkeit des zweiten Bandes bewegt. Von dieser zweiten Transferrolle wird der Abschnitt auf das zweite Band übertragen.

Aus EP 1 837 170 A1 ist eine Vorrichtung zur Herstellung von selbstklebenden Etiketten aus einem kontinuierlichen Band bekannt. Dieses Band besteht aus einem selbstklebenden Etikettenband und einem Trägerband, wobei das selbstklebende Etikettenband von dem Trägerband abgehoben und durch eine Schneidvorrichtung geführt wird, um einzelne Etiketten aus dem selbstklebenden Band herauszuschneiden. Anschließend wird das selbstklebende Etikettenband wieder auf das Trägerband zurückgeführt.

Aus dem Bereich der "Print on Demand"-Technik ist die US 6,633,740 B2 bekannt. Diese beschreibt einen elektrographischen Banddrucker mit einer präzisen Schneidvorrichtung. Unter anderem wird dabei offenbart, Etiketten zu erzeugen und präzise auszugeben. Dabei wird eine Vakuum-Abzugsrolle vorgeschlagen, um eine Rückfolie abzuziehen.

Aus US 5,024,717 ist eine Etikettiervorrichtung für Container bekannt, bei welcher Etiketten als Streifenmaterial zugeführt werden. Die Vorrichtung umfasst einen Zufuhrmechanismus, gefolgt von einem Schneidmechanismus zum Abtrennen einzelner Etiketten von dem Etikettenstreifen, und einen Rotor, der Klebeoberflächen zum Aufnehmen der abgetrennten einzelnen Etiketten aufweist.

Aus US 2,303,346 ist ein Verfahren zur Herstellung von selbstklebenden Etiketten bekannt. Dabei wird ein Etikettenband auf einer selbstklebenden Seite mit einer Rückfolie versehen, wobei vor dem Aufbringen der Rückfolie das Etikettenband verlustfrei in einzelne Etiketten getrennt wird.

In US 2002/0162617 A1 wird ein Etikettiersystem beschrieben. Das Etikettiersystem umfasst ein Etiketten-Transportrad und ein Luftdruck-System, welches mit einer Öffnung in dem Transportrad verbunden ist. Das Luftdrucksystem beaufschlagt die Öffnung mit einem Überdruck, um ein Etikett von dem Rad auf eine Oberfläche eines Artikels zu übertragen. Weiterhin wird eine Steuerung offenbart, welche ein Signal von einem Sensor empfängt, das eine Positionierung des Artikels anzeigt. In Reaktion auf dieses Signal wird ein Motor gesteuert, welcher das Rad derart rotiert, dass ein das Etikett aufnehmender Abschnitt einer Oberfläche des Artikels zuweist.

In EP 0 833 778 B1 wird ein Platziermechanismus zum Platzieren von Etiketten auf einem Produkt beschrieben. Dabei werden mittels einer Trennvorrichtung einzelne Etiketten von einer Bahn getrennt, auf einen Puffer übertragen und von diesem Puffer auf das Produkt transferiert.

In DE 41 39 924 A1 ist schließlich eine Weichpackung für Papiertaschentücher beschrieben, die eine wiederverschließbare Aufreißlasche mit großflächigen, breiten Klebeetiketten aufweist. Die Klebeetiketten werden von einer Materialbahn entsprechend der Breite des Klebeetiketts durch Stanzen hergestellt, und es wird ein Kleber aufgetragen. Dabei bleibt ein Bereich des Etiketts frei von Kleber, um eine klebstofffreie Grifflasche zu erzeugen. Unter anderem wird weiterhin vorgeschlagen, das Klebeetikett von einer fortlaufenden Materialbahn mit einseitiger Klebstoffbeschichtung durch Stanzen abfallfrei abzutrennen.

Auch die bekannten Etikettierverfahren, beispielsweise gemäß dem beschriebenen Stand der Technik, lösen jedoch die oben beschriebene Problematik des Erfordernisses einer kostengünstigen und gleichzeitig hochpräzisen Herstellung von Analysebändern hoher Qualität mit hohem Durchsatz nicht vollständig. Sämtliche der genannten Etikettierverfahren sind von ihrem Durchsatz her beschränkt und typischerweise nur für Bandgeschwindigkeiten von weniger als einem Meter pro Minute mit einer akzeptablen Toleranz bei der Etikettierung einsetzbar. Zudem weisen viele der oben beschriebenen, bekannten Etikettierverfahren einen hohen Ausschuss an Analysematerial auf, was angesichts des steigenden Kostendrucks nicht akzeptabel ist.

### Aufgabe der Erfindung

Es ist daher eine Aufgabe der vorliegenden Erfindung, ein Verfahren und eine Vorrichtung zur Herstellung von Bandware mit diagnostischen Hilfsmitteln bereitzustellen, welche die Nachteile bekannter Verfahren vermeiden und welche kostengünstig und mit höchstem Durchsatz hochpräzise Analysebänder herstellen können.

### Offenbarung der Erfindung

Diese Aufgabe wird gelöst durch ein Verfahren und eine Vorrichtung zur Herstellung eines Analysebands für Flüssigkeitsproben mit den Merkmalen der unabhängigen Ansprüche. Vorteilhafte Weiterbildungen der Erfindung, welche einzeln oder in Kombination realisierbar sind, sind in den abhängigen Ansprüchen dargestellt. Die Vorrichtung kann insbesondere zur Durchführung des vorgeschlagenen Verfahrens in einer oder mehreren der beschriebenen Varianten eingerichtet sein, sodass bezüglich möglicher Ausgestaltungen der Vorrichtung auf die Beschreibung des Verfahrens verwiesen werden kann und umgekehrt.

Das Verfahren dient der Herstellung eines Analysebands für Flüssigkeitsproben, insbesondere Körperflüssigkeiten. Das Analyseband soll eine diagnostische oder therapeutische Funktion aufweisen und kann zu diesem Zweck insbesondere mindestens ein diagnostisches Hilfsmittel umfassen. Insbesondere kann es sich bei diesem diagnostischem Hilfsmittel um mindestens ein diagnostisches Testfeld mit einer Nachweischemie handeln, welche eingerichtet ist, um einen oder mehrere Analyten in der Flüssigkeitsprobe qualitativ und/oder quantitativ nachzuweisen. Beispielsweise kann die Testchemie mindestens eine nachweisbare physikalische und/oder chemische Eigenschaft ändern, wenn diese direkt oder indirekt in Kontakt mit dem nachzuweisenden Analyten gerät. Insbesondere kann es sich um eine optisch nachweisbare Eigenschaft (beispielsweise eine Farbänderung und/oder eine Änderung einer Fluoreszenzeigenschaft) und/oder eine elektrochemisch nachweisbare Eigenschaft handeln. Alternativ oder zusätzlich kann das mindestens eine diagnostische Hilfsmittel weiterhin eine Lanzette umfassen, welche eingerichtet ist, um zu Erzeugung einer Flüssigkeitsprobe eine Hautpartie eines Patienten zu perforieren. Dabei können aus dem Stand der Technik bekannte Testfelder und Nachweischemien (beispielsweise gemäß dem oben beschriebenen Stand der Technik) und/oder aus dem Stand der Technik bekannte Lanzettenarten zum Einsatz kommen. Es können Analysebänder eingesetzt werden, welche ausschließlich diagnostische Testfelder und/oder ausschließlich Lanzetten umfassen, wobei die Testfelder und/oder Lanzetten beispielsweise in regelmäßigen oder unregelmäßigen Abständen auf einem Trägerband angeordnet sein können. Es sind jedoch auch Analysebänder denkbar, welche Testfelder und Lanzetten umfassen, welche beispielsweise alternierend angeordnet sind. Auf diese Weise kann beispielsweise mittels des Analysebandes zunächst unter Verwendung einer Lanzette eine Blutprobe oder eine andere Probe einer Körperflüssigkeit generiert werden, wonach diese Flüssigkeitsprobe beispielsweise unter Zuhilfenahme eines sich an die Lanzette auf dem Trägerband anschließenden Testfeldes analysiert werden kann.

Bei dem vorgeschlagenen Verfahren werden diagnostische Hilfsetiketten auf ein Trägerband übertragen, wobei für die Übertragung der diagnostischen Hilfsetiketten mindestens eine Vakuumwalze verwendet wird. Die diagnostischen Hilfsetiketten werden auf der Vakuumwalze detektiert. Beispielsweise können deren Position und/oder Ausrichtung detektiert werden, beispielsweise durch mindestens einen entsprechenden ersten Sensor. Weiterhin wird mindestens eine Bandposition des Trägerbandes detektiert, beispielsweise mittels mindestens eines entsprechenden zweiten Sensors. Die Übertragung der Hilfsetiketten auf das Trägerband erfolgt entsprechend der detektierten Hilfsetiketten und der detektierten Bandposition. Unter einer Übertragung entsprechend der detektierten Hilfsetiketten und der detektierten Bandposition wird dabei eine Übertragung verstanden, welche, beispielsweise hinsichtlich ihres Zeitpunkts und/oder hinsichtlich der Ausrichtung und/oder hinsichtlich der Platzierung der Hilfsetiketten durch die detektierten Bandposition und die detektierten Hilfsetiketten auf der Vakuumwalze beeinflusst wird und/oder beeinflussbar ist. Insbesondere können eine oder mehrere der Größen Übertragungszeitpunkt, Übertragungsort und Ausrichtung mindestens eines Hilfsetiketts bei der Übertragung direkt oder indirekt durch die detektierte Bandposition und mindestens ein detektiertes Hilfsetiketts auf der Vakuumwalze beeinflusst werden. Unter einer Bandposition kann dabei beispielsweise eine absolute Bandposition verstanden werden und/oder beispielsweise ein Zeitpunkt, zu welchem eine Referenzmarke von einem zweiten Sensor erfasst wird. Unter einer Detektion mindestens eines Hilfsetiketts auf der Vakuumwalze kann beispielsweise eine absolute Position und/oder eine absolute Orientierung des Hilfsetiketts auf der Vakuumwalze und/oder eine aktuelle Winkelstellung der Vakuumwalze und/oder ein Zeitpunkt verstanden werden, zu welchem das Hilfsetikett (beispielsweise eine Vorderkante und/oder eine Hinterkante des Hilfsetiketts) von mindestens einem ersten Sensor erfasst wird. Beispielsweise kann aufgrund der detektierten Bandposition und aufgrund des detektierten Hilfsetiketts eine Vorhersage darüber getroffen werden, ob das Hilfsetikett bei der aktuellen Rotationsgeschwindigkeit der Vakuumwalze und der aktuellen Bandgeschwindigkeit des Trägerbands in einer Sollposition auf dem Trägerband positioniert wird. Ist dies nicht der Fall, so können, beispielsweise durch eine Steuerung und/oder Regelung, beispielsweise die Rotationsgeschwindigkeit und/oder die Bandgeschwindigkeit beeinflusst werden. Besonders bevorzugt ist eine Beeinflussung der Rotationsgeschwindigkeit der Vakuumwalze. Die Vorhersage kann beispielsweise durch einen entsprechenden Algorithmus erfolgen und/oder durch Vergleich mit einem oder mehreren Sollwerten und/oder Kurven. Die Sollwerten und/oder Kurven können beispielsweise in einer Datenverarbeitungsvorrichtung hinterlegt sein, beispielsweise mittels einer oder mehrerer elektronischer Tabellen. Beispielsweise können elektronische Tabellen und/oder Kurven verwendet werden, bei welchen Paaren aus detektierten Bandpositionen und detektierten Hilfsetiketten jeweils Stellgrößen, beispielsweise Regelparameter, zugeordnet sind, beispielsweise Rotationsgeschwindigkeiten und/oder Beschleunigungen der Vakuumwalze.

Im Unterschied zum Stand der Technik wird also erfindungsgemäß ein Verfahren vorgeschlagen, bei welchem Hilfsetiketten, welche beispielsweise diagnostische Funktionsschichten und/oder Lanzetten umfassen können, hochpräzise mittels einer Vakuumwalze auf das Trägerband übertragen werden, in dem sowohl eine Detektion einer Bandposition des Trägerbands als auch eine Detektion der Hilfsetiketten erfolgt. Beispielsweise kann die Übertragung gesteuert und/oder geregelt erfolgen, beispielsweise entsprechend einer relativen oder absoluten Position der Hilfsetiketten auf der Vakuumwalze und/oder einer relativen oder absoluten Position des Trägerbands. Beispielsweise können die diagnostischen Hilfsetiketten als ganze erkannt werden und/oder einzelne Bestandteile dieser diagnostischen Hilfsetiketten, wobei beispielsweise eine Position und/oder Orientierung der diagnostischen Hilfsetiketten auf der Vakuumwalze detektiert werden kann, beispielsweise mittels mindestens eines entsprechenden ersten Sensors. Beispielsweise können eine oder mehrere Positionsmarken der diagnostischen Hilfsetiketten auf der Vakuumwalze detektiert werden und/oder Bestandteile der diagnostischen Hilfsetiketten, wie beispielsweise einzelne Kanten der diagnostischen Hilfsetiketten, beispielsweise eine Vorderkante eines diagnostischen Hilfsetiketts auf der Vakuumwalze. Auf diese Weise kann eine Position und/oder Orientierung erkannt werden. Eine Information über eine aktuelle Position und/oder Orientierung kann beispielsweise von einem Sensor an eine zentrale oder dezentrale Steuerung übergeben werden. Auf analoge Weise kann die mindestens eine Bandposition des Trägerbands detektiert werden. Beispielsweise können Positionsmarken auf dem Trägerband detektiert werden, wobei beispielsweise jeder Sollposition eines diagnostischen Hilfsetiketts, auf welche das diagnostische Hilfsetikett platziert werden soll, mindestens eine Positionsmarke auf dem Trägerband zugeordnet ist. Diese Positionsmarken können beispielsweise Farbmarken (beispielsweise weiße, schwarze oder bunte Streifen, Kreuze oder ähnliche Marken) oder andere Arten von Positionsmarken umfassen, welche beispielsweise von mindestens einem zweiten Sensor detektiert werden können. Auch die mindestens eine Information über die Bandposition des Trägerbands kann beispielsweise an die zentrale oder dezentrale Steuerung übermittelt werden. Auf diese Weise kann stetes genau eine relative Position und/oder Ausrichtung zwischen Trägerband und diagnostischem Hilfsetikett auf der Vakuumwalze bekannt sein.

Die diagnostischen Hilfsetiketten können insbesondere durch kontinuierliche Zuführung bereitgestellt werden. Insbesondere können die diagnostischen Hilfsetiketten durch Zuführen eines Laminatbands mit mindestens einem Laminatträgerband und mindestens einer diagnostischen Funktionsschicht bereitgestellt werden, wobei die diagnostische Funktionsschicht derart geschnitten werden kann, dass die diagnostischen Hilfsetiketten entstehen. Die diagnostische Funktionsschicht kann entsprechend der Ausgestaltung der diagnostischen Hilfsetiketten und/oder deren diagnostischer Funktion gewählt werden und kann beispielsweise, wie unten noch näher ausgeführt wird, eine Testchemie und/oder eine Lanzette umfassen. Auch eine gleichzeitige Zufuhr mehrerer Arten diagnostischer Hilfsetiketten ist möglich, beispielsweise durch gleichzeitiges Zuführen mehrerer Laminatbänder mit unterschiedlichen Arten diagnostischer Funktionsschichten.

Die diagnostische Funktionsschicht wird derart geschnitten, dass die diagnostischen Hilfsetiketten entstehen. Jedes dieser diagnostischen Hilfsetiketten kann beispielsweise ein oder mehrere diagnostische Hilfsmittel oder Bestandteile eines oder mehrerer diagnostischer Hilfsmittel umfassen. Grundsätzlich können beim Schneiden bekannte Schneidetechnologien verwendet werden, wie beispielsweise ein mechanisches Schneiden, ein Stanzen oder ein Laserschneiden. Besonders bevorzugt ist die Verwendung eines Laserschneidens. Auch Kombinationen verschiedener bekannter Schneidetechniken sind möglich. Besonders bevorzugt ist es, wenn das Schneiden der diagnostischen Funktionsschicht vor einer Übergabe der Hilfsetiketten an die Vakuumwalze erfolgt. Beispielsweise kann eine Spendekante für die diagnostischen Hilfsetiketten vorgesehen sein, an welcher die diagnostischen Hilfsetiketten von dem Laminatband abgehoben und auf die Vakuumwalze übertragen werden. Das Laminatträgerband ohne die abgehobenen diagnostischen Hilfsetiketten kann dann kontinuierlich weitergeführt und beispielsweise einer Abfallrolle zugeführt werden. Das Schneiden der diagnostischen Funktionsschicht kann dann beispielsweise vor der Spendekante erfolgen beziehungsweise vor einer anderen Art der Übergabe der diagnostischen Hilfsetiketten an die Vakuumwalze. Vorzugsweise erfolgt das Schneiden der diagnostischen Hilfsetiketten in einem Abstand zwischen 0,05 m und 1,0 m, insbesondere zwischen 0,1 m und 0,5 m und besonders bevorzugt bei 0,3 m vor einer Übergabe der Hilfsetiketten an die Vakuumwalze, beispielsweise vor einer Spendekante. Grundsätzlich ist jedoch auch ein Schneiden an oder nach der Spendekante möglich.

Besonders bevorzugt ist es, wenn die diagnostische Funktionsschicht im Wesentlichen verlustfrei in diagnostische Hilfsetiketten umgewandelt wird. Dies bedeutet insbesondere, dass kein überschüssiges Gitter entsteht, sondern dass der Schneideprozess, abgesehen von gegebenenfalls auftretenden Schneideverlusten, ohne die Bildung von Abfall, beispielsweise Gittern, erfolgt. Die diagnostischen Hilfsetiketten können somit unmittelbar aneinander angrenzen.

Das Schneiden der diagnostischen Hilfsetiketten kann insbesondere, wie oben dargestellt, unter Verwendung eines Laserschneideprozesses erfolgen, insbesondere unter Verwendung mindestens eines CO₂-Lasers. Das Laserschneiden, insbesondere in Kombination mit den bevorzugten Abständen zwischen dem Schneideprozess und der Übergabe an die Vakuumwalze, führt zu einer besonders sauberen Herstellung von diagnostischen Hilfsetiketten. So hat es sich gezeigt, dass ein Schneiden auf der Vakuumwalze zu Verunreinigungen im Fertigprodukt führen kann, bis hin zu intolerablen Ausschussraten.

Wie oben dargestellt, erfolgt vorzugsweise die Übergabe der diagnostischen Hilfsetiketten, beziehungsweise deren Übertragung auf die Vakuumwalze, mittels einer Spendekante. Unter einer Spendekante ist dabei eine scharfkantige Vorrichtung oder eine Vorrichtung mit geringem Krümmungsradius zu verstehen, um welche das Laminatband mit den darauf befindlichen, geschnittenen Hilfsetiketten geführt wird, wobei die Hilfsetiketten dem kleinen Krümmungsradius nicht folgen können und dementsprechend von dem Laminatträgerband abgehoben und auf die Vakuumwalze übertragen werden. Auch eine andere Art der Übertragung auf die Vakuumwalze ist jedoch grundsätzlich möglich. Insbesondere kann die Übertragung derart erfolgen, dass die diagnostischen Hilfsetiketten mit einer Funktionsseite, also beispielsweise einer Testchemie-Seite, auf der Vakuumwalze aufliegen. Anstelle einer einzigen Vakuumwalze können auch mehrere Vakuumwalzen verwendet werden.

Die diagnostischen Hilfsetiketten können in einer bevorzugten Ausgestaltung des Verfahrens mittels mindestens eines Laminatantriebs, welcher ein Laminatband antreibt, der Vakuumwalze zugeführt werden. Beispielsweise kann dieser Antrieb eine oder mehrere Antriebsrollen umfassen. Diese Antriebsrollen, wobei der Antrieb auch nicht-angetriebene Rollen umfassen kann, können beispielsweise das Laminatband von mindestens einem Gutwickel aus zuführen und nach Übertragung der diagnostischen Hilfsetiketten das Laminatträgerband mindestens einem Schlechtwickel zuführen.

Die diagnostischen Hilfsetiketten können von dem Laminatband auf die Vakuumwalze übertragen werden, wobei die Vakuumwalze von mindestens einem Vakuumwalzenantrieb angetrieben werden kann. Es kann mindestens ein erster Sensor verwendet werden, um eine Position und/oder Ausrichtung mindestens eines der diagnostischen Hilfsetiketten auf der Vakuumwalze zu detektieren. Beispielsweise kann mittels des mindestens einen ersten Sensors, wie oben ausgeführt, ein Zeitpunkt detektiert werden, zu welchem der erste Sensor das diagnostische Hilfsetikett oder einen Bestandteil desselben erfasst, beispielsweise eine Vorderkante und/oder eine Hinterkante. Alternativ oder zusätzlich kann das diagnostische Hilfsetikett auch auf andere Weise detektiert werden, beispielsweise mittels einer Kamera, welche das diagnostische Hilfsetikett und/oder dessen Positionierung und/oder Orientierung erfasst. Besonders bevorzugt befindet sich jeweils höchstens genau ein diagnostisches Hilfsetikett auf der Vakuumwalze. Der erste Sensor kann beispielsweise einen optischen Sensor umfassen, beispielsweise einen Reflexionssensor und/oder ein Bildverarbeitungssystem, welches das diagnostische Hilfsetikett und/oder eine Positionsmarke beziehungsweise ein Charakteristikum, beispielsweise mindestens eine Kante, des diagnostischen Hilfsetiketts detektiert. Beispielsweise kann ein Kamerasystem und/oder ein Bildverarbeitungssystem verwendet werden. Alternativ oder zusätzlich können auch andere Sensoren zum Einsatz kommen, beispielsweise Bildsensoren, andere Arten optischer Sensoren oder nicht-optische Sensoren oder Kombinationen der genannten und/oder anderer Arten von Sensoren, beispielsweise ein oder mehrere Reflexionssensoren. Wie oben dargestellt, kann mindestens eine Information über die Position und/oder Ausrichtung des mindestens einen diagnostischen Hilfsetiketts auf der Vakuumwalze beispielsweise an eine Steuerung, beispielsweise eine zentrale oder eine dezentrale Steuerung, übergeben werden. Die Steuerung kann beispielsweise einen Steuerungsmechanismus und/oder eine Regelung umfassen, welche die Platzierung der diagnostischen Hilfsetiketten auf dem Trägerband steuert und/oder regelt. Unter einem "Steuern" wird dabei allgemein eine Beeinflussung eines Arbeitsablaufs eines Gerätes oder eines Prozesses nach einem vorgegebenen Plan verstanden. Beispielsweise können, abhängig von Eingangsgrößen und/oder Zustandsgrößen, Ausgangsgrößen gesetzt werden. Unter einem "Regeln", was hier als Unterform des Steuerns verstanden wird, wird allgemein ein Vorgang verstanden, bei dem, beispielsweise kontinuierlich oder diskontinuierlich, insbesondere fortlaufend, eine Regelgröße erfasst, mit einer Führungsgröße verglichen und im Sinne einer Angleichung an die Führungsgröße beeinflusst wird. Apparativ können der Vorgang des Steuerns und/oder der Vorgang des Regelns beispielsweise, wie oben beschrieben, ganz oder teilweise in einer zentralen oder dezentralen Steuerung implementiert werden, welche beispielsweise ein oder mehrere elektronische Bauelemente und/oder eine oder mehrere Datenverarbeitungsvorrichtungen umfassen kann. Weiterhin kann die Steuerung einen oder mehrere Regelkreise umfassen, beispielsweise ebenfalls wiederum implementiert durch ein oder mehrere elektronische Bauelemente und/oder eine oder mehrere Datenverarbeitungsvorrichtungen.

Das Trägerband kann von mindestens einen Trägerantrieb angetrieben werden. Auch in diesem Fall kann der Trägerantrieb beispielsweise einen oder mehrere Antriebsrollen umfassen sowie gegebenenfalls nicht-angetriebene Rollen. Das Trägerband kann beispielsweise von einer Vorratsrolle zugeführt werden und nach Aufbringen der diagnostischen Hilfsetiketten direkt oder indirekt beispielsweise einer Analysebandrolle zugeführt werden.

Dabei kann mindestens ein zweiter Sensor verwendet werden, um beispielsweise mindestens eine Referenzmarke auf dem Trägerband zu detektieren. Wie oben dargestellt, kann auch der zweite Sensor beispielsweise einen optischen Sensor, beispielsweise ein Kamerasystem und/oder ein Bildverarbeitungssystem, umfassen und/oder einen einfacher gestalteten optischen Sensor, beispielsweise einen einfachen Schwarz-Weiß-Detektor, welcher die mindestens eine Referenzmarke detektieren kann, insbesondere mindestens einen Reflexionssensor, insbesondere einen Reflektionssensor, welcher die Reflexion eines Laserstrahls von dem Trägerband erfasst. Auch nicht-optische Sensoren sind alternativ oder zusätzlich einsetzbar, oder Kombinationen der genannten und/oder anderer Arten von Sensoren.

Die mindestens eine Referenzmarke auf dem Trägerband kann beispielsweise Referenzstreifen, Referenzkreuze oder Ähnliches umfassen. Beispielsweise kann jeweils mindestens eine Referenzmarke mindestens einer Sollposition eines diagnostischen Hilfsetiketts auf dem Trägerband zugeordnet sein. Die Referenzmarken können beispielsweise in einem Druckverfahren auf das Trägerband aufgedruckt werden, beispielsweise einem Siebdruck, einem Flexodruck, einem Tintenstrahldruck, einem Tampondruck, einem Schablonendruck oder ähnlichen Verfahren.

Sind die drei genannten Antriebe vorgesehen, so ist es besonders bevorzugt, wenn zumindest der Vakuumwalzenantrieb und der Trägerantrieb synchronisiert werden. Unter dem Begriff "synchronisiert" ist dabei im Rahmen der vorliegenden Erfindung zu verstehen, dass die Antriebe in einem vorgegebenen oder bekannten oder einstellbaren, insbesondere regelbaren, Antriebsverhältnis zueinander betrieben werden. Insbesondere kann dies bedeuten, dass der Laminatantrieb und der Trägerantrieb in einem festen, insbesondere genau vorgebbaren Antriebsverhältnis zueinander betrieben werden können, sodass beispielsweise eine Bandgeschwindigkeit des Trägerbands und eine Bandgeschwindigkeit des Laminatbands in einem festen Verhältnis zueinander eingestellt werden können. In Bezug auf den Trägerantrieb und den Vakuumwalzenantrieb kann die Synchronisation beispielsweise bedeuten, dass eine Antriebsgeschwindigkeit der Vakuumwalze gesteuert, insbesondere geregelt, werden kann, um das diagnostische Hilfsetikett in der Sollposition korrekt zu positionieren. Dies wird unten anhand der Ausführungsbeispiele noch näher erläutert. Auch andere Arten der Synchronisation im Sinne der obigen Definition sind jedoch grundsätzlich möglich.

Insbesondere kann dies bedeuten, dass, beispielsweise unter Berücksichtigung der Position und/oder Ausrichtung des mindestens einen diagnostischen Hilfsetiketts auf der Vakuumwalze und unter Berücksichtigung der jeweiligen Position der mindestens einen erkannten Referenzmarke, insbesondere eine Übertragung des diagnostischen Hilfsetiketts auf das Trägerband gesteuert und/oder geregelt erfolgen kann. Beispielsweise kann eine zentrale Steuerung und/oder Regelung vorgesehen sein, welche mindestens einen Steuerungsmechanismus und/oder mindestens eine Regelung umfasst, welche, unter Berücksichtigung der genannten Informationen über die Position und/oder Ausrichtung des mindestens einen diagnostischen Hilfsetiketts auf der Vakuumwalze und unter Berücksichtigung der Position der Referenzmarke auf dem Trägerband, einen oder beide der genannten Antriebe, also den Vakuumwalzenantrieb und/oder den Trägerantrieb steuert und/oder regelt, sodass das diagnostische Hilfsetikett auf eine Sollposition auf dem Trägerband übertragen wird. Beispielsweise kann diese Sollposition von der jeweiligen Referenzmarke aus berechnet sein. Insbesondere kann der mindestens eine zweite Sensor in Richtung des Bandlaufs vor einer Übertragungsposition des diagnostischen Hilfsetiketts auf das Trägerband angeordnet sein. Die Sollposition kann somit, neben einer absoluten Position auf dem Trägerband, eine Position im verallgemeinerten Sinne umfassen, beispielsweise auch eine relative Positionierungszeit. Beispielsweise kann die Sollposition dadurch charakterisiert sein, dass das diagnostische Hilfsetikett zu einem vorgegebenen Zeitpunkt nach dem die Referenzmarke den zweiten Sensor passiert hat, auf das Trägerband übertragen werden muss, damit dieses in einer absoluten Sollposition auf dem Trägerband positioniert ist.

Bei dem vorgeschlagenen Verfahren kann insbesondere mindestens ein Regelkreis verwendet werden, welcher beispielsweise einen oder mehrere elektronische Regler und/oder Software-gesteuerte Regler umfassen kann. Beispielsweise kann dieser mindestens eine Regelkreis, wie oben dargestellt, in einer zentralen oder dezentralen Steuerung einer Vorrichtung zur Durchführung des erfindungsgemäßen Verfahrens enthalten sein, welche eine oder mehrere elektronische Komponenten und/oder eine oder mehrere Datenverarbeitungskomponenten umfassen kann. Der Regelkreis kann den Vakuumwalzenantrieb und/oder den Trägerantrieb derart unter Berücksichtigung der Position und/oder der Ausrichtung des diagnostischen Hilfsetiketts auf der Vakuumwalze und der Position der Referenzmarke regeln, dass die diagnostischen Hilfsetiketten jeweils in Sollposition auf das Trägerband übertragen werden.

Optional kann auch der Laminatantrieb mit dem Vakuumwalzenantrieb und dem Trägerantrieb synchronisiert werden. So kann auch beispielsweise der Trägerantrieb in den genannten Regelkreis mit einbezogen werden, sodass beispielsweise auch die Übergabe diagnostischer Hilfsetiketten an die Vakuumwalze geregelt erfolgen kann, sodass sich beispielsweise kein Stau diagnostischer Hilfsetiketten bildet.

Der Regelkreis kann beispielsweise ein oder mehrere Antriebsregler, also beispielsweise Endstufen zur Regelung und/oder Steuerung eines oder mehrerer oder aller der Antriebe, umfassen, sowie gegebenenfalls einen oder mehrere Prozessoren. Weiterhin kann der Regelkreis die genannten Sensoren umfassen sowie gegebenenfalls weitere Sensoren. Der Regelkreis kann beispielsweise physikalisch zu einer Einheit zusammengefasst sein, kann jedoch auch dezentral aufgebaut sein. In einer bevorzugten Ausführungsform umfasst der Regelkreis mindestens einen Prozessor, mindestens zwei, vorzugsweise drei Antriebsregler (das heißt Verstärker, Endstufen zum Ansteuern der Antriebe) sowie den genannten mindestens einen ersten Sensor und den mindestens einen zweiten Sensor. Der mindestens eine Prozessor kann beispielsweise programmtechnisch eingerichtet sein, um ein Regelprogramm durchzuführen. Alternativ oder zusätzlich können jedoch auch elektronische Bausteine verwendet werden, beispielsweise aktive und/oder passive elektronische Regelbausteine.

Der Regelkreis kann insbesondere derart ausgestaltet sein, dass dieser den Laminatantrieb in einem festen Antriebsverhältnis zu dem Trägerantrieb betreibt. Insbesondere kann eine Antriebsrolle des Laminatantriebs in einem festen Umdrehungsverhältnis zu mindestens einer Antriebsrolle des Trägerantriebs betrieben werden. Das feste Antriebsverhältnis kann insbesondere einem festen Verhältnis einer Laminatband-Geschwindigkeit zu einer Trägerband-Geschwindigkeit entsprechen. Beispielsweise sind hier die Längen der diagnostischen Hilfsetiketten auf dem Laminatband im Verhältnis zum Abstand benachbarter Sollpositionen der diagnostischen Hilfsetiketten auf dem Trägerband nach dem Aufbringen der diagnostischen Hilfsetiketten zu berücksichtigen. Beispielsweise können der Trägerantrieb und der Laminatantrieb in einem Antriebsverhältnis von 1:7 betrieben werden. Vorzugsweise sind der Laminatantrieb und der Trägerantrieb derart synchronisiert, dass diese stark gekoppelt sind, indem dieses Antriebsverhältnis, beispielsweise das Antriebsverhältnis von 1:7, fest beibehalten wird. Der Regelkreis kann dann insbesondere ausschließlich auf den Vakuumwalzenantrieb einwirken und den Vakuumwalzenantrieb derart regeln, dass dieser beschleunigt oder abgebremst wird, um die diagnostischen Hilfsetiketten jeweils genau in den Sollpositionen auf das Trägerband zu übertragen. Der Regelkreis kann also derart eingerichtet sein, dass der Trägerantrieb und der Laminatantrieb in einem festen Antriebsverhältnis gekoppelt sind, wohingegen der Vakuumwalzenantrieb unter Berücksichtigung der Signale des ersten Sensors und des zweiten Sensors geregelt wird, um die diagnostischen Hilfsetiketten in die Sollpositionen auf das Trägerband zu übertragen.

Bei der Berechnung des Regelkreises, welcher, wie oben beschrieben, ganz oder teilweise Software-implementiert sein kann, kann insbesondere eine so genannte virtuelle Achse verwendet werden. Unter einer virtuellen Achse ist eine hypothetische ideale Achse zu verstehen, auf welche die Berechnung des Regelkreises bezogen wird. Derartige virtuelle Achsen sind grundsätzlich aus der Servotechnik bekannt. So kann insbesondere eine virtuelle Achse verwendet werden, welche vorzugsweise mit einer Achse des Trägerantriebs, beispielsweise eines Antriebsrads des Trägerantriebs, zusammenfällt. Auch andere Ausgestaltungen der virtuellen Achse sind möglich. Auf diese virtuelle Achse können dann sämtliche andere Antriebe bezogen werden. Auf diese Weise lassen sich bei der Berechnung des Regelkreises beispielsweise Ungenauigkeiten durch Trägheiten von Antriebsrollen oder Ähnlichem beseitigen.

Wie oben dargestellt, können auch mehrere erste Sensoren und/oder mehrere zweite Sensoren vorgesehen sein. Insbesondere kann der mindestens eine zweite Sensor mehrteilig aufgebaut sein und mindestens einen ersten Teilsensor und mindestens einen zweiten Teilsensor umfassen. Der erste Teilsensor und der zweite Teilsensor können insbesondere eingerichtet sein, um unterschiedliche Arten von Referenzmarken auf dem Trägerband zu detektieren. Beispielsweise kann der erste Teilsensor eingerichtet sein, um eine helle, beispielsweise weiße, Referenzmarke und/oder deren Kante zu detektieren, wohingegen der zweite Teilsensor beispielsweise eingerichtet sein kann, um eine dunkle, beispielsweise schwarze, Referenzmarke und/oder deren Kante auf dem Trägerband zu detektieren, oder umgekehrt. Da Referenzmarken aus unterschiedlichen Gründen auf dem Laminatband angeordnet sein können und da unterschiedliche Arten von Referenzmarken vorgesehen sein können, kann es bei der Detektion der Referenzmarken zu einer Mehrdeutigkeit kommen. Durch Verwendung mehrerer zweiter Sensoren kann diese Mehrdeutigkeit aufgelöst werden, was insbesondere bei der Inbetriebnahme einer Vorrichtung von Vorteil ist. So können beispielsweise mehrere weiße Referenzmarken auf dem Trägerband vorgesehen sein, welche unterschiedlich platziert sind. Ist als erster Teilsensor ein Weißsensor vorgesehen und als zweiter Sensor eine Schwarzsensor, so können beispielsweise die Referenzmarken derart eingerichtet sein, dass eine Maschinensteuerung der Vorrichtung erkennt, dass, wenn eine schwarze Referenzmarke von dem zweiten Teilsensor erkannt worden ist, die "korrekte" weiße Referenzmarke in einem vorgegebenen Abstand auf diese schwarze Referenzmarke zu folgen hat. Auf diese Weise können aus mehreren weißen Referenzmarken eindeutig die korrekten Referenzmarken erkannt werden, und die Mehrdeutigkeiten können aufgelöst werden.

Als erster Sensor und als zweiter Sensor, insbesondere als erster und zweiter Teilsensor, können, wie oben beschrieben, beispielsweise optische Sensoren eingesetzt werden. Besonders bevorzugt ist die Verwendung von Lasersensoren, welche beispielsweise die Reflexion eines Laserstrahls erfassen, welche sich beispielsweise durch die Referenzmarken und/oder die diagnostischen Hilfsetiketten ändern kann. Lasersensoren weisen allgemein aufgrund der starken Bündelung des Laserstrahls eine hohe Ortsauflösung auf.

Der Trägerantrieb kann insbesondere mindestens eine Auftragswalze aufweisen, also eine Walze, auf welcher die Auftragung des diagnostischen Hilfsetiketts auf das Trägerband erfolgt. Beispielsweise kann diese Auftragswalze derart ausgestaltet sein, dass diese als Umlenkrolle ausgestaltet ist oder eine Umlenkrolle umfasst und eingerichtet ist, um das Trägerband umzulenken, wobei das Trägerband beispielsweise durch einen Walzenspalt zwischen der Auftragswalze und der Vakuumwalze geführt werden kann. Auf diese Weise kann eine Positionierung des Trägerbands relativ zu dem Punkt der Auftragung des diagnostischen Hilfsetiketts sehr genau definiert werden, da beispielsweise durch die Verwendung der Auftragswalze sichergestellt werden kann, dass das Trägerband am Auftragspunkt unter Spannung steht.

Wie oben dargestellt, kann das diagnostische Hilfsetikett grundsätzlich mindestens ein Element aufweisen, welches eine diagnostische Funktion aufweist, beispielsweise eine Blutentnahmefunktion und/oder eine Analysefunktion. Insbesondere kann das diagnostische Hilfsetikett mindestens eines der folgenden diagnostischen Hilfsmittel umfassen: ein diagnostisches Testfeld mit einer Testchemie, welche eingerichtet ist, um einen oder mehrere Analyte in der Flüssigkeitsprobe nachzuweisen, eine Lanzette, welche eingerichtet ist, um zu Erzeugung einer Flüssigkeitsprobe eine Hautpartie eines Patienten zu perforieren. Auch andere Ausgestaltungen oder Kombinationen der genannten und/oder andere Arten diagnostischer Hilfsmittel sind möglich. Ein diagnostisches Hilfsetikett kann dabei genau ein diagnostisches Hilfsmittel oder auch mehrere diagnostische Hilfsmittel, beispielsweise mehrere diagnostische Hilfsmittel unterschiedlicher oder gleicher Art, umfassen. Das Analyseband kann, wie oben beschrieben, beispielsweise eine Mehrzahl diagnostischer Testfelder umfassen, welche in Bandlaufrichtung oder auch senkrecht zur Bandlaufrichtung nebeneinander beziehungsweise hintereinender angeordnet sein können. Alternativ oder zusätzlich kann das Analyseband alternierend Lanzetten und diagnostische Testfelder umfassen.

Das Verfahren kann dabei insbesondere auch derart durchgeführt werden, dass fehlerhafte diagnostische Hilfsetiketten erkannt und ausgeschleust werden. Beispielsweise kann das Verfahren derart durchgeführt werden, dass fehlerhafte Bereiche auf dem Laminatband von vornherein erkannt und als solche markiert werden. Dabei kann beispielsweise mindestens eine Fehlermarkierung auf dem Laminatband aufgebracht werden. Wird eine derartige Fehlermarkierung erkannt, so können die diagnostischen Hilfsetiketten beispielsweise von einem Fehlersensor, der beispielsweise die Fehlermarkierung erkennen kann, erkannt und beispielsweise bei der Übergabe vom Laminatband auf die Vakuumwalze und/oder auf der Vakuumwalze und/oder bei der Übergabe auf das Trägerband ausgeschleust werden. Das Ausschleusen kann beispielsweise durch ein Absaugen erfolgen, beispielsweise mittels einer entsprechenden Absaugvorrichtung. Alternativ oder zusätzlich zur Verwendung von Fehlermarkierungen können fehlerhafte diagnostische Hilfsetiketten und/oder fehlerhafte Bereiche auf dem Laminatband auch unmittelbar erkannt werden, beispielsweise im Bereich der Übergabe der diagnostischen Hilfsetiketten an die Vakuumwalze und/oder auf der Vakuumwalze und/oder bei der Übergabe von der Vakuumwalze auf das Trägerband. Diese Fehlererkennung kann beispielsweise wiederum auf optischem Wege erfolgen, sodass beispielsweise durch eine Mustererkennung und/oder Farberkennung erkannt wird, ob das Laminatband und/oder die diagnostischen Hilfsetiketten fehlerhaft sind. Dabei können beispielsweise auch Fluoreszenzmessungen zum Einsatz kommen, da beispielsweise Testchemien häufig ein bestimmtes Fluoreszenzverhalten aufweisen. Dieses kann zur Fehlererkennung genutzt werden.

Neben dem vorgeschlagenen Verfahren in einer oder mehreren der vorgeschlagenen Ausgestaltungen wird weiterhin eine Vorrichtung zur Herstellung eines Analysebands für Flüssigkeitsproben, insbesondere für Körperflüssigkeiten, vorgeschlagen. Die Vorrichtung kann insbesondere eingerichtet sein, um ein Verfahren in einer oder mehreren der beschriebenen Ausführungsformen durchzuführen. Entsprechend können geeignete Vorrichtungen vorgesehen sein, um die einzelnen Verfahrensschritte durchzuführen. Die Vorrichtung ist eingerichtet, um diagnostische Hilfsetiketten auf ein Trägerband zu übertragen. Die Vorrichtung weist mindestens eine Vakuumwalze für die Übertragung der diagnostischen Hilfsetiketten auf, sowie mindestens einen ersten Sensor zum Detektieren der diagnostischen Hilfsetiketten auf der Vakuumwalze und mindestens einen zweiten Sensor zum Detektieren einer Bandposition des Trägerbands. Die Vorrichtung ist eingerichtet, um die Übertragung der Hilfsetiketten auf das Trägerband entsprechend der detektierten Hilfsetiketten und der Bandposition durchzuführen.

Das vorgeschlagene Verfahren und die vorgeschlagene Vorrichtung in einer oder mehreren der beschriebenen Ausführungsformen weisen gegenüber bekannten Verfahren und Vorrichtungen zahlreiche Vorteile auf. Als Hauptvorteil ist die hochpräzise Positionierung der diagnostischen Hilfsetiketten auf das Trägerband zu nennen, welche auch bei höchsten Bandgeschwindigkeiten, beispielsweise bis hin zu 10 m/min oder mehr, zu einer hochpräzisen Positionierung der diagnostischen Hilfsetiketten führt.

Bei dem vorgeschlagenen Verfahren kann, wie oben dargestellt, als Zwischenprodukt, das Laminatband mit dem Laminatträgerband und der mindestens einen diagnostischen Funktionsschicht eingesetzt werden. Das Laminatträgerband, welches beispielsweise ein Papierband und/oder ein Kunststoffband und/oder ein mehrlagiges Trägerband umfassen kann, dient dabei in der Regel lediglich als Transportmittel der diagnostischen Funktionsschicht und kann anschließend beispielsweise entsorgt oder wiederverwendet werden. Die diagnostische Funktionsschicht ist an die Art der aufzubringenden diagnostischen Hilfsmittel angepasst und kann beispielsweise eine Vielzahl von Lanzetten und/oder mindestens eine Nachweischemie umfassen. Im letzteren Fall kann die diagnostische Funktionsschicht beispielsweise ausgestaltet sein wie in EP 1 593 434 A2 beschrieben und kann beispielsweise die Testchemie in Form mindestens eines Nachweisfilms umfassen. Zusätzlich kann die diagnostische Funktionsschicht weitere Schichten umfassen, wie beispielsweise Klebeschichten, welche vorzugsweise in diesem Fall zwischen Lanzette und/oder Testchemie und dem Laminatträgerband angeordnet sind, saugfähige Decklagen, beispielsweise Spriting-Schichten und/oder hydrophilisierende oder hydrophobisierende Imprägnierungen. Auch weitere Schichten, beispielsweise Versiegelungsschichten für Lanzetten oder Ähnliches, können umfasst sein.

In der vorliegenden Erfindung können die diagnostischen Hilfsmittel mittels der diagnostischen Hilfsetiketten in einem Rollenverfahren auf das Trägerband übertragen werden, beispielsweise ähnlich zu dem in EP 1 593 434 A2 beschriebenen Verfahren, allerdings mit erheblich verbesserter Präzision und erheblich erhöhten Durchsätzen. Hierzu kann die mindestens eine diagnostische Funktionsschicht des Laminatbands, wie oben dargestellt, beispielsweise zunächst derart geschnitten werden, dass mindestens ein diagnostisches Hilfsetikett entsteht. Dieses kann beispielsweise den Testetiketten der EP 1 593 434 A2 entsprechen und kann beispielsweise ein selbstklebendes Hilfsetikett sein.

Im Unterschied zu EP 1 593 434 A2 wird jedoch erfindungsgemäß vorgeschlagen, die Übertragung der diagnostischen Hilfsetiketten auf das Trägerband dadurch zu verbessern, dass mindestens eine Vakuumwalze eingesetzt wird. Unter einer Vakuumwalze wird dabei eine Vakuumwalze verstanden, welche, beispielsweise durch eine oder mehrere umfangseitig auf der Walze angeordnete Saugöffnungen, ein Hilfsetikett ansaugen und durch Drehung der Vakuumwalze vom Laminatband zum Laminatträgerband transportieren kann. Wie oben dargestellt, können auch mehrere Vakuumwalzen eingesetzt werden. Um die Hilfsetiketten anschließend wieder freizugeben und auf das Trägerband aufzubringen, können beispielsweise Adhäsionskräfte zwischen dem Hilfsetikett und dem Trägerband genutzt werden. Handelt es sich beispielsweise um selbstklebende diagnostische Hilfsetiketten, so können diese Adhäsionskräfte größer sein als die Saugkräfte der Vakuumwalze, sodass die diagnostischen Hilfsetiketten von der Vakuumwalze freigegeben und auf das Trägerband aufgebracht werden.

Alternativ oder zusätzlich kann die Vakuumwalze jedoch auch derart ausgestaltet sein, dass beispielsweise im Bereich des Umfangsegments der Vakuumwalze, in welcher die Aufbringung der Hilfsetiketten auf das Trägerband erfolgt, die Ansaugung der Hilfsetiketten gestoppt wird. Dies kann beispielsweise dadurch erfolgen, dass die Beaufschlagung der Ansaugöffnungen mit Vakuum in diesem Bereich unterbrochen wird, oder es kann sogar in diesem Umfangsbereich gezielt eine Beaufschlagung mit Überdruck erfolgen, beispielsweise mit Druckluft.

Vakuumwalzen sind aus anderen Bereichen der Technik, in welchen nicht-medizinische Produkte hergestellt werden, grundsätzlich bekannt. So beschreibt beispielsweise die US 6,206,071 B1 eine Vorrichtung, welche einen "Liner" von Etiketten entfernt und diese Etiketten auf Produkte aufbringt. Dabei wird eine Vakuumwalze eingesetzt. Auch WO 99/03738 beschreibt Vakuumwalzen, welche dort als Transferzylinder bezeichnet werden, für den Einsatz in Etikettiermaschinen. Für mögliche Ausgestaltungen der Vakuumwalze im Rahmen der vorliegenden Erfindung kann daher auf diese beiden Schriften verwiesen werden. Auch andere Ausgestaltungen der Vakuumwalze sind grundsätzlich denkbar und im Rahmen der vorliegenden Erfindung einsetzbar.

Im Rahmen zahlreicher Tests hat es sich gezeigt, dass die erfindungsgemäße Idee der Verwendung mindestens einer Vakuumwalze für die Übertragung der Hilfsetiketten auf das Trägerband erhebliche Vorteile hinsichtlich der Präzision der Aufbringung der Hilfsetiketten bietet. Während übliche Etikettierverfahren lediglich langsame Bandgeschwindigkeiten ermöglichen, ist es mittels des erfindungsgemäßen Verfahrens möglich, Bandgeschwindigkeiten im Bereich mehrerer zehn Meter pro Minute (beispielsweise Bandgeschwindigkeiten von mindestens 20 m/min, vorzugsweise mindestens 30 oder 40 m/min und besonders bevorzugt von mindestens 55 m/min) zu erreichen. Weiterhin können Etikettierraten von bis zu fünfhundert Etiketten pro Minute oder mehr erzielt werden, wobei Toleranzen im Sub-Millimeterbereich, beispielsweise von maximal 0,5 mm, erreichbar sind. Somit wird durch das erfindungsgemäße Verfahren der Durchsatz erhöht, Kosten werden gesenkt, und gleichzeitig wird eine hohe Qualität der erzeugten Analysebänder gewahrt beziehungsweise sichergestellt.

Eine besonders bevorzugte, oben bereits beschriebene Ausgestaltung des Verfahrens und/oder der Vorrichtung beinhaltet eine Synchronisation mehrerer Antriebe, beispielsweise des Vakuumwalzenantriebs und des Trägerantriebs und optional auch des Laminatantriebs. Zur Verwendung in den Antrieben eignen sich beispielsweise Elektromotoren, insbesondere leistungsstarke Servomotoren, welche mit hoher Genauigkeit ausgestaltet sind. So können beispielsweise drei Servomotoren eingesetzt werden, welche beispielsweise über ein Bus-System angesteuert werden können. Als Anlagensteuerung kann beispielsweise eine spezielle Hochleistungs-SPS fungieren. Aufgrund der hohen Transportgeschwindigkeit des Laminatträgerbands und/oder des Trägerbands sollten die Reaktionszeiten der SPS-Steuerung extrem niedrig sein. Zudem sollte die Reaktionszeit pro Zyklus immer gleich lang sein, um bei variablen Geschwindigkeiten einen exakten Gleichlauf (Synchronisation) der Antriebe erreichen zu können, da beispielsweise eine Millisekunde Schaltzeit bei der Geschwindigkeit von etwa 55 m/min eine Platzierungstoleranz von 1 mm in Durchlaufrichtung bedeutet.

Die oben beschriebene, optionale Verwendung eines Lasers als Schneidvorrichtung, beispielsweise eines CO₂-Lasers, führt zu einer besonders hohen Schneidegenauigkeit, einer besonderes hohen Schneidegeschwindigkeit und geringem Verschnitt der diagnostischen Hilfsetiketten. Die bevorzugte entfernte Anordnung vom Übergabepunkt der diagnostischen Hilfsetiketten an die Vakuumwalze führt zu den oben dargestellten Vorteilen. So ist insbesondere eine Synchronisation der Schneidevorrichtung mit einem Antrieb der Vakuumwalze nicht zwingend erforderlich, wobei eine derartige Synchronisation naturgemäß dennoch erfolgen kann. Zudem ist die Positionierungsgenauigkeit der diagnostischen Hilfsetiketten auf dem Trägerband nicht von der Schneidegenauigkeit abhängig, da mittels des mindestens einen ersten Sensors das Resultat des Schneidevorgangs überwacht werden kann, indem direkt das diagnostische Hilfsetikett auf der Vakuumwalze überwacht wird. Auf eine Positioniergenauigkeit und/oder ein Timing des Schneidevorgangs kommt es dann nicht mehr oder lediglich in erheblich geringerem Maße an.

Wie oben dargestellt und im Unterschied zu bekannten Etikettierverfahren, wie beispielsweise dem in EP 1 593 434 A2 bekannten Etikettierverfahren, kann das Schneiden der diagnostischen Hilfsetiketten bei dem vorgeschlagenen Verfahren insbesondere im Wesentlichen verlustfrei durchgeführt werden. Unter "im Wesentlichen verlustfrei" kann dabei ein Schneiden verstandnen werden, bei welchem, abgesehen vom Verschnitt durch die Schneidvorrichtung (welcher typischerweise im Bereich von einem Zehntel Millimeter liegen kann), kein Abfall entsteht, welcher, wie in EP 1 593 434 A2 beschrieben, abgegittert werden müsste. Die diagnostische Funktionsschicht kann also vorzugsweise vollständig in Hilfsetiketten zerschnitten werden. Dies bedeutet einen erheblichen Vorteil gegenüber üblichen Etikettierverfahren, wie nicht nur dem in EP 1 593 434 A2 beschriebenen Verfahren, sondern beispielsweise auch dem Etikettierverfahren gemäß US 6,206,071 B1 oder anderen bekannten Etikettiervorrichtungen, da das Abgittern in der Praxis nicht nur erheblichen technischen Aufwand verursachen kann sondern da nun mehr die kostenintensive diagnostische Funktionsschicht vollständig genutzt werden kann.

Weitere vorteilhafte Ausgestaltungen und Vorteile können die Bandführung des Laminatbands beziehungsweise des Laminatträgerbands und/oder des Trägerbands betreffen. So kann beispielsweise für eine bessere Führung durch die genannten Antriebe das Laminatträgerband und/oder das Trägerband beispielsweise elektrostatisch aufgeladen werden, um eine bessere Haftung beispielsweise auf einer oder mehreren Rollen der Antriebe, zu gewährleisten.

Wie oben beschrieben, kann das Verfahren insbesondere derart ausgestaltet sein, dass eine Fehlererkennung und/oder eine Ausschleusung von fehlerhaften diagnostischen Hilfsetiketten erfolgen kann. So kann die Vakuumwalze, wie oben beschrieben, insbesondere dazu genutzt werden, fehlerhafte diagnostische Hilfsetiketten und/oder fehlerhafte Abschnitte der diagnostischen Funktionsschicht aus dem Herstellungsprozess auszuschleusen. Zu diesem Zweck können beispielsweise die diagnostische Funktionsschicht und/oder andere Bereiche des Laminatbands mit einer Fehlermarkierung versehen werden, welche fehlerhafte Abschnitte der diagnostischen Funktionsschicht kenntlich macht. Diese Fehlermarkerungen können beispielsweise dadurch aufgebracht werden, dass die beschriebene Vorrichtung eine Fehlererkennungsvorrichtung aufweist und/oder eine Markierungsvorrichtung. Die Fehlererkennungsvorrichtung kann beispielsweise derart ausgestaltet sein, dass die diagnostische Funktionsschicht und/oder das Laminatband optisch und/oder elektrisch und/oder auf andere Weise auf Fehler untersucht werden. Auf diese Weise kann beispielsweise eine Verfärbung einer Testschemie und/oder eine Fehlpositionierung von Lanzetten auf dem Laminatband erkannt werden. Die Fehlermarkierungsvorrichtung kann eingesetzt werden, um das Laminatband und/oder die diagnostische Funktionsschicht entsprechend zu markieren, wenn derartige Fehler erkannt werden. So können beispielsweise Fehlermarkierungen auf das Laminatband und/oder die diagnostische Funktionsschicht aufgedruckt werden und/oder es kann eine anders gestaltete Markierung der Fehler erfolgen. Beispielsweise kenn eine Testchemie selbst durch Einwirkung eines Markierungsstrahls, beispielsweise eines Lichtstrahls insbesondere im sichtbaren und/oder ultravioletten Spektralbereich verwendet werden. Auf diese Weise können beispielsweise fehlerhafte Abschnitte der in der Regel lichtempfindlichen Testchemie eingefärbt werden, um auf diese Weise diese Abschnitte als fehlerhaft kenntlich zu machen. Alternativ oder zusätzlich kann jedoch, wie oben dargestellt, eine Fehlererkennung auch unmittelbar bei oder vor der Ausschleusung erfolgen, beispielsweise durch eine Fehlererkennung unmittelbar im Bereich der Vakuumwalze. Verschiedene Ausgestaltungen sind möglich.

Die Vorrichtung kann weiterhin im Bereich der Etikettiereinrichtung, also im Bereich der Vakuumwalze und des Übertrags der diagnostischen Hilfsetiketten auf das Trägerband, beispielsweise in unmittelbarer Nähe der Vakuumwalze, eine Detektionsvorrichtung aufweisen, welche die Fehlermarkierung und/oder die Fehler in den diagnostischen Hilfsetiketten und/oder der diagnostischen Funktionsschicht erkennt. Beispielsweise kann es sich dabei um eine optische und/oder elektrische Detektionsvorrichtung handeln, welche speziell auf die Fehlermarkierung angepasst sein kann und somit beispielsweise aufgedruckte Fehlermarkierungen und/oder verfärbte Bereiche in der Testchemie erkennen kann.

Die Ausschleusung von fehlerhaften Abschnitten der diagnostischen Funktionsschicht und/oder fehlerhaften diagnostischen Hilfsetiketten kann, wie oben dargestellt, an verschiedenen Stellen und/oder auf verschiedene Weise erfolgen. Die verwendete Vakuumwalze erlaubt ein besonders einfaches Ausschleusen derartiger fehlerhafter Abschnitte der diagnostischen Funktionsschicht und/oder fehlerhafter diagnostischer Hilfsetiketten. So können vor oder nach dem Aufbringen auf die Vakuumwalze als fehlerhaft erkannte und/oder fehlerhaft markierte diagnostische Hilfsetiketten und/oder Abschnitte entfernt und beispielsweise entsorgt werden. Für dieses Entfernen fehlerhafter Abschnitte und/oder fehlerhafter diagnostischer Hilfsetiketten kann beispielsweise die Vorrichtung eine Abzugsvorrichtung aufweisen, wobei als Abzugsvorrichtung verschiedene Vorrichtungen einsetzbar sind. So kann das Entfernen der fehlerhaften Abschnitte an der Vakuumwalze beispielsweise auf elektrostatischem, auf mechanischem oder auf anderem Wege erfolgen. Besonders bevorzugt ist es, wenn eine Absaugvorrichtung verwendet wird, welche zum Entfernen der fehlerhaften Abschnitte genutzt wird und welche beispielsweise von der Detektionsvorrichtung getriggert wird, sobald ein als fehlerhaft erkannter und/oder als fehlerhaft markierter Abschnitt beziehungsweise ein derartiges diagnostisches Hilfsetikett erkannt wird. Eine derartige Absaugung kann innerhalb von Sekundenbruchteilen erfolgen, sodass der Produktionsprozess als Ganzes nicht oder nur unwesentlich beeinflusst werden muss. Zudem bietet die Absaugvorrichtung den Vorteil, dass gleichzeitig oder zusätzlich zu fehlerhaften Abschnitten der diagnostischen Funktionsschicht auch Verunreinigungen entfernt werden können, sodass eine Problemantik der Kontamination deutlich reduziert werden kann.

Wie oben beschrieben können die diagnostischen Hilfsetiketten ein oder mehrere diagnostische Hilfsmittel umfassen, welche beispielsweise durch das beschriebene Verfahren in regelmäßigen oder vorgegebenen Abständen auf das Trägerband aufgebracht werden. Besonders bevorzugt ist es, wenn die diagnostischen Hilfsetiketten jeweils mehrere derartige diagnostische Hilfsmittel umfassen, vorzugsweise mehrere gleichartig gestaltete diagnostische Hilfsmittel. Auf diese Weise kann das beschriebene Verfahren beispielsweise dadurch rationalisiert werden, dass die diagnostische Funktionsschicht des Laminatbands mehrere parallel in einer Laufrichtung des Laminatbands angeordnete Bahnen diagnostischer Hilfsmittel aufweist, sodass beim Schneiden der diagnostischen Funktionsschicht das dabei entstehende diagnostische Hilfsetikett mehrere diagnostische Hilfsmittel aufweist, welche dann in Anordnung senkrecht zur Laufrichtung des Trägerbands auf dieses aufgebracht werden. Das Trägerband kann dann beispielsweise durch einen mechanischen oder optischen Schneideprozess parallel zur Längserstreckungsrichtung in mehrere Teil-Bänder geschnitten werden, wobei beispielsweise jedes dieser Teil-Bänder ein diagnostisches Hilfsmittel jedes diagnostischen Hilfsetiketts umfasst. Die Teil-Bänder können anschließend als eigentliche Analysebänder verwendet werden. Dieses beschriebene Schneidverfahren in mehrere Teil-Bänder kann beispielsweise analog zu dem in EP 1 593 434 A2 beschriebenen Schneidverfahren ausgestaltet werden.

Weiterhin wird darauf hingewiesen, dass die Analysebänder nachfolgend auch in Längsrichtung in Analyseband-Abschnitte zerlegt werden können. Dabei können Teil-Bänder entstehen, welche beispielsweise in eine entsprechende Bandkassette eingespult werden können. Jedes dieser Teil-Bänder kann mehrere analytische Hilfsmittel umfassen. Alternativ können die Analysebänder auch derart geschnitten werden, dass diese zu Teststreifen verarbeitet werden, welche jeweils lediglich ein oder mehrere analytische Hilfsmittel umfassen. Verschiedene Ausgestaltungen sind möglich.

Weiterhin kann das Verfahren dadurch weiterentwickelt werden, dass das Trägerband zusätzliche Markierungen umfasst. Wie oben beschrieben, kann die Bandposition des Trägerbands beispielsweise mittels mindestens einer Referenzmarke auf dem Trägerband detektiert werden, welche beispielsweise als Positionsmarke ausgestaltet sein kann und/oder mindestens eine Positionsmarke umfassen kann. Alternativ oder zusätzlich kann das Trägerband weitere Marken umfassen, beispielsweise weitere Referenzmarken für eine optische Kalibrierung des Analysebands. Insbesondere können Farbmarkierungen auf dem Trägerband aufgebracht sein, welche einen Farbabgleich ermöglichen. Diese sind insbesondere dann von Vorteil, wenn das Analyseband diagnostische Hilfsmittel umfasst, welche auf optischem Wege genutzt werden, beispielsweise Testchemien, welche für einen optischen Analytnachweis genutzt werden. So können die Referenzmarken beispielsweise weiße und/oder schwarze Felder umfassen, welche für einen derartigen Farbabgleich und/oder eine Kalibrierung eingesetzter Lichtquellen, beispielsweise Remissionsmessungen, genutzt werden können. Die mindestens eine optionale Referenzmarke kann dabei auch Doppelfunktionen aufweisen und kann beispielsweise als Referenzmarke für eine Erkennung der Bandposition und als Referenzmarke für eine Kalibrierung und/oder einen Farbabgleich genutzt werden. Verschiedene Ausgestaltungen sind möglich.

Das vorgeschlagene Verfahren und die vorgeschlagene Vorrichtung können sich insbesondere dadurch auszeichnen, dass der Vorprozess des Etikettenschneidens entfallen kann. Das Schneiden der diagnostischen Hilfsetiketten kann beispielsweise etwa 30 cm vor dem Übergabepunkt der Etiketten auf die Vakuumwalze, welche als Applikationswalze eingesetzt wird, erfolgen. Dadurch können die Etiketten ohne Gitter geschnitten werden, was zu einer Materialersparnis von etwa 25 Prozent führen kann. Von der genannten Vakuumwalze können die diagnostischen Hilfsetiketten auf das Trägerband übertragen werden, welches beispielsweise als Trägerfolie ausgestaltet sein kann, die beispielsweise über eine Auftragswalze geführt werden kann. Die Vakuumwalze und die Auftragswalze können mit eigenständigen Antrieben ausgestattet und so synchronisiert sein, dass das Applizieren auf die Trägerfolie mit einer sehr hohen Genauigkeit erfolgen kann und zusätzlich auch noch Ungenauigkeiten, die durch den Einsatzstoff der Trägerfolie eingebracht werden können, ausgeglichen werden können.

Wie oben dargestellt, kann diese hohe Genauigkeit beispielsweise durch einen hochdynamischen Regelkreis erreicht werden. Teil des Regelkreises kann zum einen der mindestens eine zweite Sensor sein, welcher beispielsweise die mindestens eine Referenzmarke auf dem Trägerband detektiert, und zum anderen ein erster Sensor, der beispielsweise die diagnostischen Hilfsetiketten, beispielsweise Kanten der jeweiligen diagnostischen Hilfsetiketten, nach Übergabe auf die Vakuumwalze auf der Vakuumwalze erkennen kann.

Des Weiteren kann, wie oben dargestellt, eine virtuelle Achse Bestandteil des Regelkreises sein, mit deren Hilfe mögliche Ungenauigkeiten, beispielsweise Toleranzschwankungen, ausgeglichen werden können, während sich die diagnostischen Hilfsetiketten, angesaugt auf der Vakuumwalze, vom Übergabepunkt an die Vakuumwalze, beispielsweise vom Scheitelpunkt der Vakuumwalze, durch die Drehung der Vakuumwalze auf die entsprechende Position auf dem Trägerband bewegen. Daher können Maschinen, die mit diesem neuen Verfahren ausgestattet sind, im Vergleich zu Maschinen mit dem bisherigen Verfahren bei weitaus größeren Bahngeschwindigkeiten betrieben werden. Die Grenze der Bahngeschwindigkeit ist grundsätzlich festgelegt durch die Schaltgeschwindigkeit der verwendeten Sensoren. Die Möglichkeit der Synchronisation der verschiedenen Antriebe mit Hilfe dieses hochdynamischen Regelkreises und der optionalen virtuellen Achse zeichnet dieses neue Verfahren besonders aus.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche beziehungsweise hinsichtlich ihrer Funktionen einander entsprechende Elemente.

Im Einzelnen zeigen:
- Figur 1: ein Ausführungsbeispiel eines nach einem erfindungsgemäßen Verfahren herstellbaren Analysebands;
- Figur 2: ein Ausführungsbeispiel eines Blutzucker-Testgeräts mit einer ein Analyseband enthaltenden Bandkassette;
- Figur 3: ein Ausführungsbeispiel eines bei einem erfindungsgemäßen Verfahren einsetzbaren Laminatbands in Draufsicht;
- Figur 4: das Laminatband gemäß Figur 3 in einer Schnittdarstellung;
- Figur 5: ein Ausführungsbeispiel eines bei einem erfindungsgemäßen Verfahren eingesetzten Trägerbands mit einem aufgebrachten diagnostischen Hilfsetikett;
- Figur 6: ein Ausführungsbeispiel einer erfindungsgemäßen Vorrichtung zur Herstellung eines analytischen Testbands;
- Figur 7: ein zu Figur 1 alternatives Ausführungsbeispiel eines Analysebands mit diagnostischen Hilfselementen mit Lanzetten;
- Figur 8: eine Detaildarstellung eines diagnostischen Hilfselements des Analysebands gemäß Figur 7; und
- Figur 9: ein Ausführungsbeispiel einer Bandkassette für ein diagnostisches Testband, auf welchem alternierend diagnostische Hilfsmittel mit Testfeldern und diagnostische Hilfsmittel mit Lanzetten aufgebracht sind.

### Ausführungsbeispiele

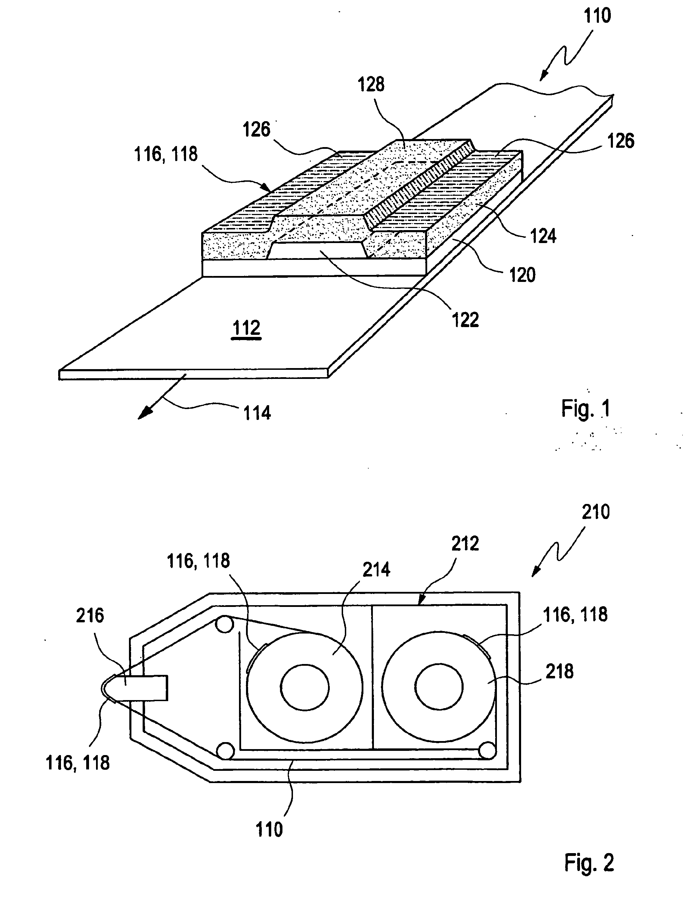

In Figur 1 ist ein mögliches Ausführungsbeispiel eines Analysebandes 110, wie es beispielsweise aus EP 1 593 434 A2 bekannt ist und wie es beispielsweise durch ein im Nachfolgenden beschriebenes erfindungsgemäßes Verfahren hergestellt werden kann, dargestellt. Das Analyseband 110 umfasst ein Trägerband 112, welches beispielsweise als Trägerfolie in Form einer Kunststofffolie ausgestaltet sein kann. Diese Trägerfolie kann beispielsweise sehr dünn ausgestaltet sein, beispielsweise mit einer Dicke zwischen 10 und 15 µm, und kann mindestens ein Kunststoffmaterial, beispielsweise Polyethylen, umfassen. Auch andere Ausgestaltungen des Trägerbands 112 sind jedoch möglich, beispielsweise Laminatbänder, Papierstreifen oder ähnliches.

Auf dem Trägerband 112 sind in einer Transportrichtung 114 beabstandet eine Vielzahl von Testfeldern 116 aufgebracht. Die Testfelder 116 sind dabei jeweils in Sollpositionen auf dem Trägerband 112 angeordnet. Von diesen Testfeldern 116, welche beispielsweise in einem Abstand von 110 mm angeordnet sein können, und eine Länge in Transportrichtung 114 von ca. 15 mm aufweisen können, ist in Figur 1 lediglich eines dargestellt. Im Folgenden sei angenommen, dass die Testfelder 116 ausgestaltet sind, um einen Analyten, insbesondere Blutglukose, in Körperflüssigkeiten, insbesondere in Blut, nachzuweisen.

Das Analyseband 110 gemäß der Darstellung in Figur 1 kann beispielsweise dem Ausführungsbeispiel gemäß EP 1 596 434 A2 entsprechen. Die Testfelder 116 bilden in diesem Ausführungsbeispiel jeweils ein diagnostisches Hilfsmittel 118 und können beispielsweise als selbstklebende Testetiketten mehrlagig ausgebildet sein. Sie umfassen jeweils einen Abschnitt eines optionalen Klebebandes 120, eines Films einer Testchemie 122 und einer optionalen saugfähigen Decklage 124 in Form eines Gewebes. Diese Decklage 124 dient dazu, dass eine aufgebrachte flüssige Probe sich gleichmäßig auf dem Testfeld 116 verteilen kann und wird oft auch als "Spriting-Schicht" bezeichnet. Außerhalb der Testchemie 122 ist diese Decklage 124, welche vorzugsweise hydrophile Eigenschaften aufweist, bereichsweise mit einer Imprägnierung 126, welche vorzugsweise hydrophobe Eigenschaften aufweist, versehen. Beispielsweise kann es sich bei dieser Imprägnierung 126 um eine aufgedruckte Wachsschicht handeln, welche lediglich eine zentrale Nachweiszone 128 im Bereich der Testchemie 122 freilässt, innerhalb derer sich die flüssige Probe ausbreiten kann. Die Testchemie 122 soll ausgestaltet sein, um mindestens eine nachweisbare Eigenschaft, beispielsweise eine optische oder elektrochemische Eigenschaft, zu ändern, wenn diese in Kontakt mit dem mindestens einen nachzuweisenden Analyten gerät. Derartige Testchemien sind aus dem Stand der Technik, beispielsweise dem eingangs zitierten Stand der Technik, bekannt.

In Figur 2 ist in stark schematisierter Darstellung ein Blutzucker-Testgerät 210 gezeigt, in welchem sich das Analyseband 110, aufgenommen in einer Bandkassette 212, einsetzen lässt. Weitere optionale Details des Blutzucker-Testgeräts 210 sind in Figur 2 nicht dargestellt. Dabei ist das Analyseband 110 auf einem Gutwickel 214 aufgewickelt. Durch Vorspulen können die einzelnen Testfelder 116 im Bereich eines Messkopfes 216 exponiert werden, um einen Blutzuckertropfen für die Glukosebestimmung aufzutragen. Die Flüssigkeitsaufnahme erfolgt dabei in der zentralen Nachweiszone 128 der Decklage 124, wobei die mit der Imprägnierung 126 versehenen Randstreifen die Flüssigkeitsausbreitung begrenzen. Aufgrund des mehrlagigen Aufbaus besitzen die Testfelder 116 eine gewisse Höhe, während das dünne, flexible Trägerband 112 in den dazwischenliegenden Bereichen eine zuverlässige Abdichtung an Dichtelementen erlaubt, sodass eine sichere und vor Umwelteinflüssen geschützte Magazinierung möglich ist. Nach Verwendung werden die benutzten Testfelder 116 durch Weiterspulen des Analysebandes 110 auf einen Schlechtwickel 218 aufgespult und somit sicher und hygienisch remagaziniert.

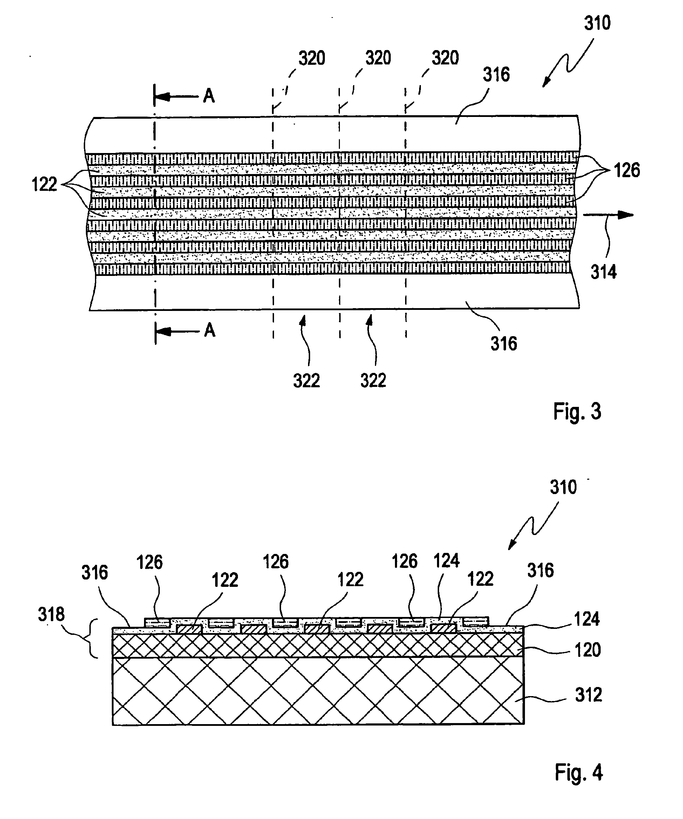

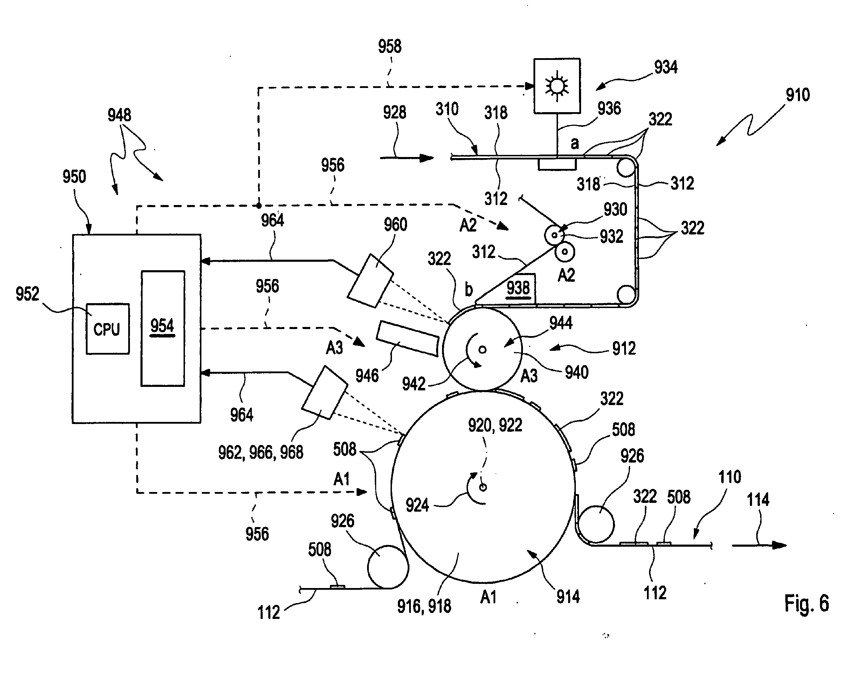

Erfindungsgemäß wird die Herstellung der Analysebänder 110 vorzugsweise mittels eines Rolle-zu-Rolle-Verfahrens vorgenommen, welches unten anhand der Figur 6 exemplarisch näher erläutert wird. Als Vorprodukt für die Herstellung des Analysebandes wird zum einen das in Figur 1 bereits beschriebene Trägerband 112 verwendet. Als zweites Vorprodukt wird erfindungsgemäß ein Laminatband 310 eingesetzt. Exemplarisch ist ein derartiges Laminatband für die Erzeugung von diagnostischen Hilfsmitteln 118 mit einer Testchemie 122 in den Figuren 3 und 4 dargestellt. Dabei zeigt Figur 3 eine Draufsicht auf das Laminatband 310, wohingegen Figur 4 eine Schnittdarstellung entlang der Schnittlinie A-A in Figur 3 zeigt.

Wie aus Figur 4 erkennbar ist, weist das Laminatband ein Laminatträgerband 312 auf. Dieses Laminatträgerband 312 kann beispielsweise wiederum ein Kunststoffband umfassen, beispielsweise wieder eine Polyethylen-Folie oder ein ähnlich gestaltetes Laminatträgerband. Auf dieses Laminatträgerband 312 ist die Klebeschicht 120 aufgebracht, welche der Klebeschicht 120 in Figur 1 entspricht und bei dem erfindungsgemäßen Verfahren vorzugsweise vom Laminatträgerband 312 mit auf das Trägerband 112 übertragen wird. Auf die Klebeschicht ist in strukturierten Bahnen die Testchemie 122 aufgebracht, wobei sich die Bahnen parallel zu einer Laufrichtung 314 des Laminatbandes 310 erstrecken. Im vorliegenden Fall weisen diese Bahnen der Testchemie 122 eine Breite von ca. 2 mm auf (die Darstellung in den Figuren 3 und 4 sind lediglich schematisch und nicht maßstabsgerecht) und sind äquidistant angeordnet, mit einem Zwischenraum von ebenfalls ca. 2-3 mm. Insgesamt sind auf dem Laminatband 310 fünf Streifen von Testchemie 122 vorgesehen.

Wie oben beschrieben, sind die Testchemie-Streifen 122 mit einer Decklage 124 eines hydrophilen Gewebes bedeckt. Diese Bedeckung erfolgt derart, dass sich die Decklage 124 über die gesamte Breite des Laminatträgerbandes 312 erstreckt. Wie oben beschrieben, wird zudem außerhalb der Testchemie 122 auf die Decklage 124 jeweils eine ebenfalls streifenförmige Imprägnierung 126 aufgebracht, wobei insgesamt sechs derartige Streifen der Imprägnierung 126, welche sich ebenfalls in Laufrichtung 314 erstrecken, aufgebracht werden. Diese Aufbringung erfolgt derart, dass Randbereiche 316 des Laminatbandes 310 unbedeckt bleiben.

Die Klebeschicht 120, die Testchemie 122, die Decklage 124 und die Imprägnierung 126 bilden zusammen eine diagnostische Funktionsschicht 318. Diese diagnostische Funktionsschicht 318 wird in dem unten beschriebenen Verfahren entlang von senkrecht zur Laufrichtung 314 verlaufenden Schnittlinien 320 geschnitten, wohingegen das Laminatträgerband 312 ungeschnitten verbleibt. Auf diese Weise bilden sich aus der diagnostischen Funktionsschicht 318 beim Schneiden diagnostische Hilfsetiketten 322, welche auf das Trägerband 112 übertragen werden.

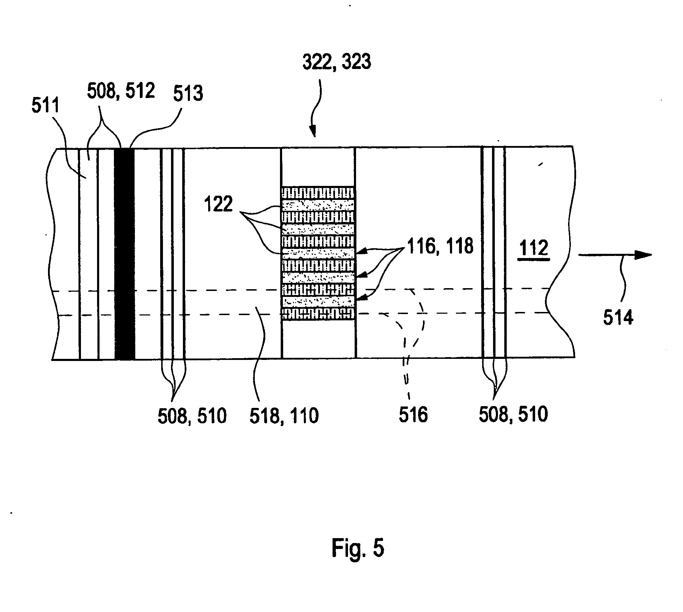

In Figur 5 ist ein derartiges Trägerband 112 mit darauf aufgeklebten diagnostischen Hilfsetiketten 322 schematisch dargestellt. Wiederum ist nur ein derartiges diagnostisches Hilfsetikett 322 gezeigt, andere Hilfsetiketten 322 sind äquidistant hierzu jeweils in Sollpositionen 323 angeordnet. Benachbarte Sollpositionen 323 können beispielsweise jeweils in einem Abstand von 110 mm voneinander angeordnet sein, welcher auch als "Pitch" bezeichnet werden kann.

Weiterhin ist in Figur 5 erkennbar, dass auf dem Trägerband 112 eine Mehrzahl von Referenzmarken 508 mit unterschiedlichen Funktionen angeordnet ist. Beispielsweise umfassen diese Referenzmarken 508 im dargestellten Beispiel Positionsmarken 510, welche in Figur 5 lediglich schematisch angedeutet sind. Diese Positionierungsmarken 510 können beispielsweise als weiße Streifen ausgestaltet sein und können beispielsweise zur Positionierung der Testfelder 116 in dem Blutzucker-Testgerät 210 gemäß Figur 2 verwendet werden. Weiterhin können diese Positionierungsmarken 510 optional bei dem unten beschriebenen Herstellungsverfahren eingesetzt werden. Neben den Positionierungsmarken 510 umfasst das Trägerband 112 in dem in Figur 5 dargestellten Ausführungsbeispiel jeweils Farbreferenzmarken 512, beispielsweise in Form jeweils eines senkrecht zur Laufrichtung 514 des Trägerbandes 112 aufgebrachten weißen Balkens 511 und eines schwarzen Balkens 513, welche für einen Farbabgleich und/oder Remissionsabgleich genutzt werden können. Auch diese Farbreferenzmarken 512 können als Referenzmarken 508 für das unten näher beschriebene Herstellungsverfahren eingesetzt werden.

Das diagnostische Hilfsetikett 322 umfasst, entsprechend der streifenförmigen Anordnung der Testchemie 122, in diesem Ausführungsbeispiel fünf diagnostische Hilfsmittel 118 in Form von Testfeldern 116, welche parallel zueinander nebeneinander senkrecht zur Laufrichtung 514 angeordnet sind. In einem anschließenden Schneideverfahren wird das derart erzeugte Trägerband 112 mit den darauf aufgebrachten diagnostischen Hilfsetiketten 322 entlang von Schnittlinien 516, welche parallel zur Laufrichtung 514 verlaufen und in Figur 5 lediglich angedeutet sind, geschnitten. Insgesamt sind beispielsweise im vorliegenden Fall sechs derartige Schnittlinien 516 nötig, entlang derer das Trägerband 112 mit den darauf aufgebrachten Hilfsetiketten 322 in Teil-Bänder 518 geschnitten wird. Jedes dieser dabei in Figur 5 entstehenden fünf Teil-Bänder 518 bildet ein Analyseband 110, beispielsweise ein Analyseband 110 gemäß der Darstellung in Figur 1. Auf diese Weise lassen sich somit durch das erfindungsgemäße Rolle-zu-Rolle-Verfahren parallel und gleichzeitig fünf Analysebänder 110 herstellen.

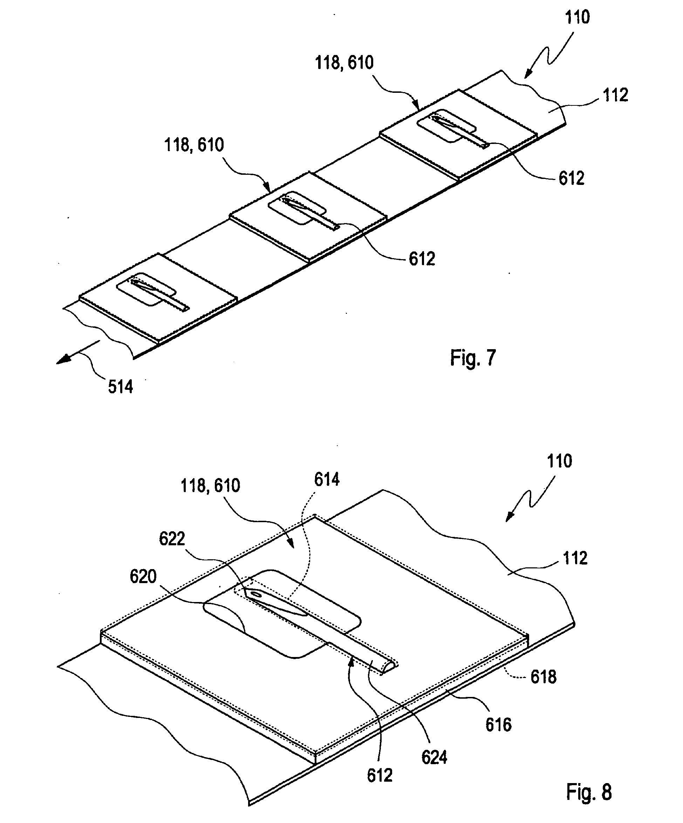

Die oben beschriebenen Ausführungsbeispiele sind Beispiele, bei denen das Analyseband 110 ausschließlich diagnostische Hilfsmittel 118 in Form von Testfeldern 116 umfasst. Auch andere Arten diagnostischer Hilfsmittel 118 sind jedoch denkbar und im Rahmen der Diagnostik und/oder Therapeutik im Zusammenhang mit einem Analyseband 110 einsetzbar. Ein Ausführungsbeispiel eines alternativen Analysebandes 110 ist in Figur 7 dargestellt. Dieses Analyseband 110 weist wiederum ein Trägerband 112 auf, welches in diesem Ausführungsbeispiel diagnostische Hilfsmittel 118 in Form von Lanzettenpackungen 610 mit jeweils einer Lanzette 612 äquidistant aufgebracht sind. Referenzmarken 508, welche zusätzlich und analog beispielsweise zu Figur 5 auf dem Trägerband 112 enthalten sein können, sind in Figur 7 nicht dargestellt. Die Lanzettenpackungen 610 sind in Figur 8 in vergrößerter Detaildarstellung gezeigt. Die Lanzettenpackungen 610 können, analog zu den diagnostischen Hilfsetiketten 322 in den vorangehend beschriebenen Ausführungsbeispielen, ebenfalls in Form von Etiketten auf dem Trägerband 112 fixiert werden. Aufgrund der flexiblen und flachen Lanzettenpackungen 610 ergibt sich so ein aufrollbares Analyseband 110, welches in ein Handgerät zur automatischen Handhabung einsetzbar ist (beispielsweise analog zu dem in Figur 2 dargestellten Handgerät).

In der Vergrößerung nach Figur 8 ist zu erkennen, dass die jeweilige Lanzette 612 in einer durch die Lanzettenpackung 610 gebildeten Tasche 614 geschützt ist. Die Tasche 614 wird durch einen Folienverbund aus einer Bodenfolie 616 und einer Deckfolie 618 gebildet. Ein erweiterter Taschenbereich 620 nimmt die Lanzettenspitze 622 freiliegend auf, während ein proximaler Schaftabschnitt 624 der Lanzette 612 eng eingeschlossen wird. Ein maschineller Umgang auch mit sehr kleinen Nadelelementen wird somit erleichtert, ohne dass eine Beschädigung der sehr empfindlichen Lanzettenspitze 622 sowie eine Beeinträchtigung von deren Sterilität befürchtet werden muss. In der gezeigten Ausführung ist eine senkrecht zur Laufrichtung 514 ausgerichtete Rundlanzette 612 vorgesehen. Denkbar sind auch andere Orientierungen und/oder Ausformungen, beispielsweise in Form eines mit einem rillenförmigen kapillaren Sammelkanal versehenen flachen Stechelements.

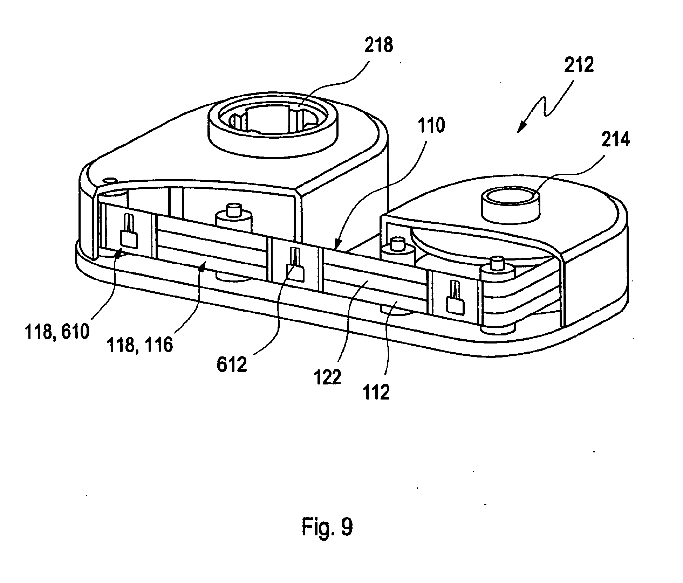

In Figur 9 ist ein Ausführungsbeispiel einer Bandkassette 212 dargestellt, welche ein Ausführungsbeispiel eines Analysebandes 110 beinhaltet, auf dem alternierend diagnostische Hilfsmittel 118 in Form von Testfeldern 116 und Lanzettenpackungen 610 aufgebracht sind. Jede Lanzettenpackung 610 umfasst eine Lanzette 612, welche beispielsweise in diesem Ausführungsbeispiel als Flachlanzette ausgestaltet sein kann und welche grundsätzlich ähnlich zu dem in den Figuren 7 und 8 dargestellten Ausführungsbeispiel ausgestaltet sein kann. Sowohl die Testfelder 116 als auch die Lanzettenpackungen 610 können in Form von Etiketten auf ein Trägerband 112 des Analysebandes aufgebracht sein.

Die Bandkassette 212 umfasst wiederum einen Gutwickel 214 als Vorratsspule für unverbrauchtes Bandmaterial und einen Schlechtwickel 218 als Aufwickelspule zur Remagazinierung bzw. Entsorgung von verbrauchten diagnostischen Hilfsmitteln 118. Die Bereitstellung diagnostischer Hilfsmittel 118 kann durch sukzessiven Bandvorschub, vorzugsweise in einem Handgerät, erfolgen, um einen weitgehend automatischen Messablauf zu ermöglichen. Ein derartiges Handgerät kann beispielsweise einen Aktuator zur Betätigung der jeweils in einer Applikationsposition befindlichen Lanzette 612 umfassen und eine Auswertevorrichtung zur Auswertung (beispielsweise optischen Auswertung) der Messung der Analytkonzentration mittels des jeweiligen in einer Messposition befindlichen Testfeldes 116. Im Zuge einer derartigen Messung, die vom Patienten vor Ort selbst vorgenommen werden kann, wird eine dünne Deckfolie (Bezugsziffer 618 in Figur 8) von der Lanzette 612 aufgeschlitzt und dabei die Lanzettenspitze 622 freigelegt. Durch einen geeigneten Aktuator kann dann eine Stechbewegung beispielsweise zum Einstechen in einen Finger durchgeführt werden. Der proximale Schaftabschnitt 624 bleibt hierbei zweckmäßig mit dem Folienlaminat verbunden, sodass die anschließende Entsorgung der Lanzette 612 auf dem Trägerband 112 vereinfacht wird.

Die genannten diagnostischen Hilfsmittel 118, welche Testfelder 116 und/oder Lanzetten 612 umfassen können, sind nur einige der vielen möglichen Ausführungsbeispiele, welche für die medizinische Diagnostik und/oder Therapeutik verwendet werden können und für welche das nachfolgend beschriebene Herstellungsverfahren einsetzbar ist. Daneben sind Analysebänder 110 einsetzbar, welche andere Arten diagnostischer Hilfsmittel 118 oder Kombinationen derartiger diagnostischer Hilfsmittel 118 umfassen können.

In Figur 6 ist ein Ausführungsbeispiel einer erfindungsgemäßen Vorrichtung 910 zur Herstellung eines Analysebands 110 dargestellt. Zur Vereinfachung wird im Folgenden angenommen, dass es sich bei dem Analyseband 110 um ein Analyseband handelt, welches analog zu den Ausführungsbeispielen in den Figuren 1 und 5 aufgebaut ist. Auch andere Arten von Analysebändern 110 sind jedoch grundsätzlich mittels der Vorrichtung 910 herstellbar. Weiterhin soll anhand der Figur 6 ein Ausführungsbeispiel eines erfindungsgemäßen Herstellungsverfahrens zur Herstellung eines derartigen Analysebands 110 beschrieben werden.

Die Vorrichtung 910 umfasst eine Etikettiervorrichtung 912, mittels derer diagnostische Hilfsetiketten 322 mit höchster Präzision auf ein sich in einer Transportrichtung 114 bewegendes Trägerband 112 aufgebracht werden. Bezüglich der möglichen Ausgestaltungen des Trägerbands 112 kann beispielsweise auf die obige Beschreibung verwiesen werden.

Das Trägerband 112 wird beispielsweise von einer Transportrolle bereitgestellt, und das Trägerband 112 wird durch einen Trägerantrieb 914 angetrieben. Beispielsweise kann sich das Trägerband 112 mit Bandgeschwindigkeiten von 55 m/min oder sogar mehr bewegen. Die Möglichkeit der Realisierung hoher Bandgeschwindigkeiten stellt einen der wesentlichen Vorteile des vorgeschlagenen Verfahrens und der vorgeschlagenen Vorrichtung 910 dar.

Der Trägerantrieb 914 umfasst im dargestellten Ausführungsbeispiel eine als Umlenkrolle 916 ausgestaltete Antriebsrolle 918. Der Trägerantrieb 914, welcher in Figur 6 symbolisch mit A1 bezeichnet ist, wirkt vorzugsweise unmittelbar auf eine Achse 920 dieser Antriebsrolle 918. Diese Achse 920 fällt zusammen mit einer für die Berechnung des Regelkreises verwendeten virtuellen Achse 922, auf welche bezüglich der Berechnung aller anderen Antriebe und deren Regelung Bezug genommen wird. Die Antriebsrolle 918 dreht sich in einer Drehrichtung 924 um diese Achse. Mittels kleinerer, vorzugsweise nicht angetriebener Rollen 926 wird sichergestellt, dass das Trägerband 912 im Bereich der Etikettiervorrichtung 912 an der Antriebsrolle 918 anliegt. Nach Durchlaufen der Etikettiervorrichtung 912 kann das nunmehr mit den diagnostischen Hilfsetiketten 322 bestückte Trägerband 112, welches somit vollständig oder teilweise zum Analyseband 110 geworden ist (wobei sich jedoch auch noch weitere Verfahrensschritte anschließen können), beispielsweise auf einen Gutwickel aufgewickelt werden.

Weiterhin wird in der erfindungsgemäßen Vorrichtung 910 ein Laminatband 310 in einer Transportrichtung 928 bereitgestellt. Beispielsweise kann diese Bereitstellung von einem in Figur 6 ebenfalls nicht dargestellten Gutwickel aus erfolgen. Das Laminatband umfasst ein Laminatträgerband 312 und eine diagnostische Funktionsschicht 318 und kann beispielsweise analog zur Beschreibung in den Figuren 3 und 4 aufgebaut sein. Das Laminatband 310 wird durch einen Laminatantrieb 930 angetrieben, welcher beispielsweise, wie in Figur 6 dargestellt, eine Antriebsrolle 932 umfassen kann. Der Laminatantrieb 930 ist in Figur 6 symbolisch mit A 2 bezeichnet. Wie auch beim Trägerantrieb 914, können auch beim Laminatantrieb 930 optional mehrere Antriebsrollen 932 vorgesehen sein. Nach Durchlaufen der Etikettiervorrichtung 912 kann das verbrauchte Laminatband 310, welches nunmehr beispielsweise nur noch aus dem Laminatträgerband 312 bestehen kann, beispielsweise einem Schlechtwickel zugeführt werden, welcher in Figur 6 ebenfalls nicht dargestellt ist.

Auf seinem Weg von Gutwickel zur Etikettiervorrichtung 912 durchläuft das Laminatband 310 eine Laserschneidevorrichtung 934 oder alternativ oder zusätzlich eine andere Art von Schneidevorrichtung. Besonders bevorzugt ist die Verwendung eines CO₂-Lasers. Die Laserschneidevorrichtung 934 erzeugt einen Laserstrahl 936, beispielsweise einen gepulsten oder kontinuierlichen Laserstrahl 936, welcher an einer in Figur 6 mit dem Buchstaben a bezeichneten Schneidestelle, die diagnostische Funktionsschicht 318 des Laminatbands 310, welche an dieser Stelle der Laserschneidevorrichtung 934 zuweist, in regelmäßigen Abständen in diagnostische Hilfsetiketten 322 zerschneidet. Diese diagnostische Hilfsetiketten 322 werden durch den Laminatantrieb 930 einer Spendekante 938 der Etikettiervorrichtung 912 zugeführt. An dieser Spendekante 938 wird das Laminatband 310 so stark umgelenkt, dass sich die diagnostischen Hilfsetiketten 322 vom Laminatträgerband 312 abheben und auf eine Vakuumwalze 940 der Etikettiervorrichtung 912 übertragen werden. Das von den diagnostischen Hilfsetiketten 322 befreite Laminatträgerband 312 wird, wie oben beschrieben, anschließend beispielsweise einen Schlechtwickel zugeführt.

Ein Vorteil der Anordnung der Schneidevorrichtung, insbesondere der Laserschneidevorrichtung 934, beabstandet von dem in Figur 6 mit dem Buchstaben b bezeichneten Übergabepunkt von der Spendekante 938 auf die Vakuumwalze 940 bewirkt, dass Laserabbrand, welcher beim Laserschneiden oder bei anderen Arten von Schneideprozessen entstehen kann, nicht auf die Vakuumwalze 940 übertragen werden kann und diese verunreinigen kann. Vorzugsweise beträgt der Abstand zwischen den Punkten a und b in Figur 6 mindestens 5 cm, wobei Abstände von 30 cm oder mehr bevorzugt sind.

Durch die Vakuumwalze werden die diagnostischen Hilfsetiketten 322 angesaugt. Die Vakuumwalze 940 dreht sich in einer Drehrichtung 942, welche der Drehrichtung 924 der Antriebsrolle 918 entgegengerichtet ist. Es sei jedoch darauf hingewiesen, dass auch mehrere Vakuumwalzen 940 verwendet werden können, sodass dieser Wechsel der Drehrichtung nicht notwendigerweise erforderlich ist. Die Vakuumwalze 940 wird von einem Vakuumwalzenantrieb 944 angetrieben. Dieser ist in Figur 6 symbolisch auch mit A 3 bezeichnet. Von der Vakuumwalze 940, auf deren Oberfläche sich vorzugsweise jeweils genau ein diagnostisches Hilfsetikett 322 befindet, werden die diagnostischen Hilfsetiketten 322 auf das Trägerband 112 übertragen und dort in jeweils ihren Sollpositionen auf demselben positioniert. Dabei sind die diagnostischen Hilfsetiketten 322 vorzugsweise derart auf die Vakuumwalze 940 aufgebracht, dass diese mit ihrer Klebeschicht (beispielsweise Bezugsziffer 120 in Figur 4) nach oben, also von der Vakuumwalze 940 weg weisen.

Für die Ausgestaltung der Vakuumwalze 940 kann grundsätzlich auf bekannte Vakuumwalzen verwiesen werden. So kann die Vakuumwalze 940 beispielsweise eine Drucksteuereinrichtung aufweisen, welche den Druck in Ansaugöffnungen auf der Oberfläche der Vakuumwalze 940 steuert und diese abwechselnd mit Unterdruck und Überdruck beaufschlagt. Beispielsweise kann die Drucksteuereinrichtung derart ausgerichtet sein, dass die diagnostischen Hilfsetiketten zwischen dem Übergabepunkt an der Spendekante 938 und dem Walzenspalt zwischen der Vakuumwalze 940 und der Antriebsrolle 918 des Trägerantriebs 914, also dem Übergabepunkt an das Trägerband 912, mit Vakuum beaufschlagt werden und anschließend mit Überdruck. Damit kann die Drucksteuerung durch die Drucksteuereinrichtung derart ausgestaltet werden, dass die diagnostischen Hilfsetiketten 322 ab dem Auftrag im Bereich der Spendekante 938 angesaugt und in diesem Zustand gehalten werden, bis diese den Walzenspalt zwischen der als Auftragswalze fungierenden Antriebsrolle 918 und der Vakuumwalze 940 erreichen, an welcher Stelle der Auftrag der diagnostischen Hilfsetiketten 322 auf das Trägerband 912 erfolgt. Dort erfolgt durch die Drucksteuereinrichtung dann vorzugsweise eine Druckumkehr, und die Ansaugöffnungen können mit einem Überdruck beaufschlagt werden, um die diagnostischen Hilfsetiketten 322 freizugeben und auf das Trägerband 112 zu übertragen.

Mögliche Ausgestaltungen der Vakuumwalze 940 und der optionalen Drucksteuereinrichtung lassen sich beispielsweise den bereits zitierten Schriften WO 99/03938 und US 6,206,071 B1 entnehmen. Weitere Ausführungsbeispiele einer Vakuumwalze 940 lassen sich beispielsweise der nachveröffentlichten internationalen Patentanmeldung mit der Anmeldenummer PCT/EP 2008/064614 aus dem Hause der Anmelderin der vorliegenden Patentanmeldung entnehmen.

Weiterhin umfasst die Vorrichtung 910 gemäß Figur 6 optional eine Absaugvorrichtung 946. Mittels dieser Absaugvorrichtung 946 können beispielsweise beim Beginn des Herstellungsverfahrens, also beim Anlaufen der Vorrichtung 910, überschüssige Abschnitte der diagnostische Funktionsschicht 318 und/oder überschüssige diagnostische Hilfsetiketten 322 abgesaugt werden. Alternativ oder zusätzlich können auch Schmutzpartikel von der Oberfläche der Vakuumwalze 940 abgesaugt werden, und/oder es können als fehlerhaft erkannte und/oder als fehlerhaft markierte diagnostische Hilfsetiketten 322 aus dem Verfahren ausgeschleust werden.

Wie oben dargestellt, ist bei den hohen Bandlaufgeschwindigkeiten eine Präzision der Etikettiervorrichtung 912 essentiell. Die in Figur 6 dargestellte Vorrichtung 910 umfasst daher einen Regelkreis, welcher in Figur 6 symbolisch mit der Bezugsziffer 948 bezeichnet ist. Dieser Regelkreis 948 umfasst eine zentrale oder dezentrale Steuerung 950. Die Steuerung 950 umfasst im dargestellten Ausführungsbeispiel mindestens eine Datenverarbeitungsvorrichtung 952, hier als "CPU" bezeichnet, sowie 1, 2, 3 oder mehr Antriebseinheiten 954. Diese Antriebseinheiten 954 können beispielsweise einzelne oder zusammengefasste Antriebseinheiten 954 für den Trägerantrieb 914, den Laminatantrieb 930 und den Vakuumwalzenantrieb 944 umfassen. Die Antriebseinheiten 954 können beispielsweise Verstärkerendstufen umfassen, mittels derer sich beispielsweise die Drehzahlen dieser Antriebe 914, 914, 930 und 944 einzeln oder gruppenweise einstellen lassen. Die Steuerung 950 ist mit den Antrieben 914, 930, 944 beispielsweise über Steuerleitungen 956 verbunden, über welche sich beispielsweise Signale an diese Antriebe 914, 930 und 944 übermitteln lassen, sodass sich beispielsweise die genannten Drehzahlen präzise einstellen lassen.

Weiterhin ist in Figur 6 symbolisch dargestellt, dass auch die Laserschneidevorrichtung 934 von dem Regelkreis 948 gesteuert werden kann. Insbesondere kann die Laserschneidevorrichtung 934, wie in Figur 6 ebenfalls dargestellt, direkt oder indirekt mit dem Laminatantrieb 930 gekoppelt sein. Eine Lasersteuerleitung ist in Figur 6 symbolisch mit der Bezugsziffer 958 bezeichnet. Diese kann beispielsweise mit einer Antriebseinheit 954 gekoppelt sein, welche eine Verstärkerendstufe für den Laminatantrieb 930 beinhaltet. Auf diese Weise kann die Laserschneidevorrichtung 934 beispielsweise mit dem Laminatantrieb 930 derart synchronisiert werden, dass die Länge der diagnostischen Hilfsetiketten 322 stets der vorgegebenen Länge entspricht.

Weiterhin umfasst der Regelkreis 948 in dem Ausführungsbeispiel gemäß Figur 6 mindestens einen ersten Sensor 960 und mindestens einen zweiten Sensor 962. Beispielsweise kann es sich dabei, wie oben ausgeführt, um optische Sensoren handeln. Die Sensoren 960, 962 sind jeweils über Sensorsignalleitungen 964 mit der Steuerung 950 verbunden, insbesondere mit der Datenverarbeitungsvorrichtung 952.

Der erste Sensor 960, wobei auch mehrere derartige erste Sensoren 960 vorgesehen sein können, ist im Bereich der Vakuumwalze 940 angeordnet und detektiert die diagnostischen Hilfsetiketten 322 auf der Vakuumwalze 940. Beispielsweise kann der erste Sensor 960 in einer festen Winkelposition über der Vakuumwalze 940 positioniert sein und eine Vorderkante oder Hinterkante eines diagnostischen Hilfsetiketts 322 und/oder andere Besonderheiten der diagnostischen Hilfsetiketten 322 erkennen. Beispielsweise kann bei einer Erkennung einer derartigen Kante ein Signal generiert und über die zugehörige Sensorsignalleitung 964 übermittelt werden. Auf diese Weise kann beispielsweise eine Information über eine aktuelle Position des diagnostischen Hilfsetiketts 322 auf der Vakuumwalze 940 generiert werden. Alternativ oder zusätzlich zu einer Position kann auch beispielsweise eine Ausrichtung des diagnostischen Hilfsetiketts 322 detektiert werden.

Der zweite Sensor 962 ist vorzugsweise zweiteilig aufgebaut und umfasst vorzugsweise mindestens einen ersten Teilsensor 966 und mindestens einen zweiten Teilsensor 968. Der erste Teilsensor 966 und der zweite Teilsensor 968 können beispielsweise in der Zeichenebene in Figur 6 hintereinander angeordnet sein, also senkrecht zur Längserstreckungsrichtung des Trägerbands 112. Der zweite Sensor 962 dient zur Detektion der Referenzmarken 508 oder einiger dieser Referenzmarken 508 auf dem Trägerband 112.

Die optionale Ausgestaltung des zweiten Sensors 962 mit den beiden Teilsensoren 966, 968 dient beispielsweise, wie oben beschrieben, dazu, Mehrdeutigkeiten unter den Referenzmarken 508 aufzulösen. Beispielsweise kann das Ziel des zweiten Sensors 962 sein, eine Vorderkante oder eine Hinterkante des weißen Balkens 511 der Farbreferenzmarken 512 zu erkennen. Allerdings können auch weitere Referenzmarken 508, wie oben dargestellt, ganz oder teilweise in weißer Farbe ausgestaltet sein, beispielsweise die Positionierungsmarken 510. Erkennt der zweite Sensor 962 also eine derartige Kante, so ist unklar, welcher Referenzmarke 508 diese zuzuordnen ist. Bei der mehrteiligen Ausgestaltung des zweiten Sensors 962 kann hingegen beispielsweise der erste Teilsensor 966 für die Erkennung der weißen Kante ausgestaltet sein. Der zweite Teilsensor 968 kann hingegen zur Erkennung einer schwarzen Kante ausgestaltet werden, beispielsweise einer Vorderkante und/oder einer Hinterkante des schwarzen Balkens 513 in Figur 5. Wird eine derartige schwarze Kante erkannt, so erkennt die Datenverarbeitungsvorrichtung 952 aufgrund ihrer Programmierung, dass die "korrekte" weiße Kante in einem vorgegebenen Abstand von dieser schwarzen Kante folgen muss. Auf diese Weise kann die Mehrdeutigkeit aufgelöst werden und die "korrekte" weiße Kante eindeutig ermittelt werden. Diese Eindeutigkeit ist insbesondere beim Anfahren der Vorrichtung 910 von Bedeutung. Grundsätzlich kann jedoch auch eine andere Ausgestaltung erfolgen.

Der Regelkreis 948 arbeitet vorzugsweise nach folgendem Prinzip. Als Master-Achse wird die virtuelle Achse 922 der Antriebsrolle 918 verwendet. Auf diese werden alle anderen Achsen der Antriebe 914, 930 und 944 vorzugsweise bezogen. Dies erleichtert die Umrechnung und die Berechnung der Regelung in der Datenverarbeitungsvorrichtung 952, welche wiederum die Antriebseinheit 954 steuern kann.

Zunächst wird der Laminatantrieb 930 in einem festen Antriebsverhältnis an den Trägerantrieb 914 gekoppelt. So kann diese Kopplung beispielsweise derart erfolgen, dass die Transportgeschwindigkeit des Trägerbands 112 um ein 7-faches höher ist als die Transportgeschwindigkeit des Laminatbands 310. Auch andere Kopplungsverhältnisse sind grundsätzlich möglich. Diese starre Kopplung kann beispielsweise durch eine entsprechende Steuerung und/oder Schaltung der zugehörigen Antriebseinheiten 954 erfolgen.

Weiterhin werden die Signale der Sensoren 960 und 962 berücksichtigt. So wird mittels des zweiten Sensors 962 eine aktuelle Bandposition des Trägerbands 112 ermittelt. Mittels des ersten Sensors 960 wird hingegen eine aktuelle Position eines diagnostischen Hilfsetiketts 322 auf der Oberfläche der Vakuumwalze 940 ermittelt. Mittels dieser Informationen, einschließlich gegebenenfalls der bekannten Bandgeschwindigkeit des Trägerbands 112 und der gegebenenfalls bekannten aktuellen Rotationsgeschwindigkeit der Vakuumwalze 940, kann ermittelt werden, ob das diagnostische Hilfsetikett 322 in seiner Sollposition auf dem Trägerband 112 positioniert würde oder in einer davon abweichenden Position. Wird eine Abweichung erkannt, so kann durch den Regelkreis 948 die Vakuumwalze 940 entsprechend beschleunigt oder abgebremst werden, beispielsweise durch entsprechende Ansteuerung der zugehörigen Antriebseinheit 954, sodass die Sollposition doch erreicht wird. Auf diese Weise lässt sich eine hochpräzise Positionierung der diagnostischen Hilfsetiketten 322 in ihren Sollpositionen auch bei höchsten Bandlaufgeschwindigkeiten erreichen. Durch die Verwendung der virtuellen Achse 922, auf welche alle anderen Achsen bezogen werden, lassen sich die Fehler des Reglers insgesamt minimieren. Die Berechnung der Regelung, also beispielsweise die Berechnung, wie stark die Vakuumwalze 940 abgebremst beziehungsweise beschleunigt werden muss, kann vollständig oder teilweise Software-implementiert erfolgen. Beispielsweise in der Datenverarbeitungsvorrichtung 952. Alternativ oder zusätzlich ist jedoch auch die Verwendung von Hardware-implementierten Reglern möglich.

Es sei darauf hingewiesen, dass die in Figur 6 gezeigte Vorrichtung lediglich eine mögliche Ausgestaltung einer erfindungsgemäßen Vorrichtung 910 darstellt. Zudem kann die Vorrichtung 910 weitere, in Figur 6 nicht gezeigte Elemente umfassen. So können beispielsweise Schneidevorrichtungen vorgesehen sein, um, wie oben anhand der Figur 5 beschrieben, das Analyseband 110 weiter in Teil-Bänder zu zerschneiden. Auch kann das Analyseband 110 in einzelne streifenförmige Testelemente zerschnitten werden, welche beispielsweise in Einzelteststreifen-Messgeräten eingesetzt werden können. Bevorzugt ist jedoch die Verwendung für Bandmagazine. Darüber hinaus kann die Vorrichtung 910 beispielsweise Druckvorrichtungen, Vorrichtungen zum Aufbringen weiterer Schichten, Testvorrichtungen, insbesondere zur Qualitätsüberwachung, Markierungsvorrichtungen oder Kombinationen der genannten und/oder anderer weiterer Elemente umfassen.

Weiterhin sei noch darauf hingewiesen, dass das Vorhandensein von explizit als solchen definierten Referenzmarken 508 auf dem Trägerband 112 nicht notwendig erforderlich ist. So können als Referenzmarken 508 im Sinne der vorliegenden Erfindung auch beispielsweise Konturen von Bestandteilen des Trägerbands 112 selbst verwendet werden. Beispielsweise können auf dem Trägerband 112 bereits vor Erreichen der Etikettiervorrichtung 912 Konturen aufgebracht sein, welche beispielsweise eine separate Funktion erfüllen können und welche beispielsweise von dem zweiten Sensor 962 erfasst werden können. In diesem Fall können diese Konturen als Referenzmarken 508 im Sinne der obigen Beschreibung verwendet werden.

### Bezugszeichenliste

| | |
|---|---|
| 110 | Analyseband |
| 112 | Trägerband |
| 114 | Transportrichtung |
| 116 | Testfeld |
| 118 | diagnostisches Hilfsmittel |
| 120 | Klebeschicht |
| 122 | Testchemie |
| 124 | Decklage |
| 126 | Imprägnierung |
| 128 | zentrale Nachweiszone |
| | |
| 210 | Blutzucker-Testgerät |
| 212 | Bandkassette |
| 214 | Gutwickel |
| 216 | Messkopf |
| 218 | Schlechtwickel |
| | |
| 310 | Laminatband |
| 312 | Laminatträgerband |
| 314 | Laufrichtung |
| 316 | Randbereiche |
| 318 | diagnostische Funktionsschicht |
| 320 | Schnittlinien |
| 322 | diagnostische Hilfsetiketten |
| 323 | Sollposition |
| | |
| 508 | Referenzrahmen |
| 510 | Positionierungsmarken |
| 511 | weißer Balken |
| 512 | Farbreferenzmarken |
| 513 | schwarzer Balken |
| 514 | Laufrichtung |
| 516 | Schnittlinien |
| 518 | Teilbänder |
| 610 | Lanzettenpackung |
| 612 | Lanzette |
| 614 | Tasche |
| 616 | Bodenfolie |
| 618 | Deckfolie |
| 620 | erweiterter Taschenbereich |
| 622 | Lanzettenspitze |
| 624 | proximaler Schaftabschnitt |
| | |
| 910 | Vorrichtung zur Herstellung Analyseband |
| 912 | Etikettiervorrichtung |
| 914 | Trägerantrieb |
| 916 | Umlenkrolle |
| 918 | Antriebsrolle |
| 920 | Achse |
| 922 | virtuelle Achse |
| 924 | Drehrichtung |
| 926 | Rollen |
| 928 | Transportrichtung |
| 930 | Laminatantrieb |
| 932 | Antriebsrolle |
| 934 | Laserschneidevorrichtung |
| 936 | Laserstrahl |
| 938 | Spendekante |
| 940 | Vakuumwalze |
| 942 | Drehrichtung |
| 944 | Vakuumwalzenantrieb |
| 946 | Absaugvorrichtung |
| 948 | Regelkreis |
| 950 | Steuerung |
| 952 | Datenverarbeitungsvorrichtung |
| 954 | Antriebseinheiten |
| 956 | Steuerleitungen |
| 958 | Lasersteuerleitung |
| 960 | erster Sensor |
| 962 | zweiter Sensor |
| 964 | Sensorsignalleitungen |
| 966 | erster Teilsensor |
| 968 | zweiter Teilsensor |

## Patentansprüche

1. Verfahren zur Herstellung eines Analysebandes (110) für Flüssigkeitsproben, insbesondere Körperflüssigkeiten, wobei das Analyseband (110) ein Trägerband (112) umfasst, wobei diagnostische Hilfsetiketten (322) auf das Trägerband (112) übertragen werden, wobei für die Übertragung der diagnostischen Hilfsetiketten (322) mindestens eine Vakuumwalze (940) verwendet wird, wobei die diagnostischen Hilfsetiketten (322) auf der Vakuumwalze (940) detektiert werden, wobei weiterhin mindestens eine Bandposition des Trägerbands (112) detektiert wird, wobei die Übertragung der Hilfsetiketten (322) auf das Trägerband (112) entsprechend der detektierten Hilfsetiketten (322) und der Bandposition erfolgt, wobei die diagnostischen Hilfsetiketten (322) mittels eines Laminatantriebs (930), welcher ein Laminatband (310) antreibt, der Vakuumwalze (940) zugeführt werden, wobei die diagnostischen Hilfsetiketten (322) von dem Laminatband (310) auf die Vakuumwalze (940) übertragen werden, wobei die Vakuumwalze (940) von mindestens einem Vakuumwalzenantrieb (944) angetrieben wird, wobei mindestens ein erster Sensor (960) verwendet wird, um eine Position und/oder Ausrichtung mindestens eines der diagnostischen Hilfsetiketten (322) auf der Vakuumwalze (940) zu detektieren, wobei das Trägerband (112) von mindestens einem Trägerantrieb (914) angetrieben wird, wobei mindestens ein zweiter Sensor (962) verwendet wird, um mindestens eine Referenzmarke (508) auf dem Trägerband (112) zu detektieren, wobei zumindest der Vakuumwalzenantrieb (944) und der Trägerantrieb (914) synchronisiert werden.

2. Verfahren nach dem vorhergehenden Anspruch, wobei die diagnostischen Hilfsetiketten (322) durch Zuführen eines Laminatbands (310) mit mindestens einem Laminatträgerband (312) und mindestens einer diagnostischen Funktionsschicht (318) bereitgestellt werden, wobei die diagnostische Funktionsschicht (318) derart geschnitten wird, dass die diagnostischen Hilfsetiketten (322) entstehen.

3. Verfahren nach dem vorhergehenden Anspruch, wobei das Schneiden der diagnostischen Funktionsschicht (318) vor einer Übergabe der Hilfsetiketten (322) an die Vakuumwalze (940) erfolgt.

4. Verfahren nach einem der beiden vorhergehenden Ansprüche, wobei die diagnostische Funktionsschicht (318) im Wesentlichen verlustfrei in diagnostische Hilfsetiketten (322) umgewandelt wird.

5. Verfahren nach einem der drei vorhergehenden Ansprüche, wobei das Schneiden der diagnostischen Hilfsetiketten (322) in einem Abstand zwischen 0,05 m und 1,0 m, insbesondere zwischen 0,1 m und 0,5 m und besonders bevorzugt bei 0,3 m vor einer Übergabe der Hilfsetiketten (322) an die Vakuumwalze (940) erfolgt.

6. Verfahren nach einem der vier vorhergehenden Ansprüche, wobei das Schneiden der diagnostischen Hilfsetiketten (322) unter Verwendung eines Laserschneideprozesses erfolgt, insbesondere unter Verwendung eines CO₂-Lasers.

7. Verfahren nach einem der vorhergehenden Ansprüche, wobei die diagnostischen Hilfsetiketten (322) an mindestens einer Spendekante (938) auf die Vakuumwalze (940) übertragen werden.

8. Verfahren nach einem der vorhergehenden Ansprüche, wobei mindestens ein Regelkreis (948) verwendet wird, wobei der Regelkreis (948) den Vakuumwalzenantrieb (944) und den Trägerantrieb (914) derart unter Berücksichtigung der Position und/oder der Ausrichtung des diagnostischen Hilfsetiketts (322) auf der Vakuumwalze (940) und der Position der Referenzmarke (508) regelt, dass die diagnostischen Hilfsetiketten (322) in Sollpositionen (323) auf das Trägerband (112) übertragen werden.

9. Verfahren nach einem der vorhergehenden Ansprüche, wobei der Regelkreis (948) den Laminatantrieb (930) in einem festen Antriebsverhältnis, insbesondere einem festen Umdrehungsverhältnis, zu dem Trägerantrieb (914) betreibt.

10. Verfahren nach einem der vorhergehenden Ansprüche, wobei der Regelkreis (948) eine virtuelle Achse (922) verwendet, auf welche eine Berechnung des Regelkreises (948) bezogen wird, wobei die virtuelle Achse (922) vorzugsweise mit einer Achse (920) des Trägerantriebs (914) zusammenfällt.

11. Verfahren nach einem der vorhergehenden Ansprüche, wobei der zweite Sensor (962) mindestens einen ersten Teilsensor (966) und mindestens einen zweiten Teilsensor (968) umfasst, wobei der erste Teilsensor (966) und der zweite Teilsensor (968) eingerichtet sind, um unterschiedliche Arten von Referenzmarken (508) auf dem Trägerband (112) zu detektieren.

12. Verfahren nach einem der vorhergehenden Ansprüche, wobei jeweils genau ein diagnostisches Hilfsetikett (322) gleichzeitig auf der Vakuumwalze (940) aufgebracht ist.

13. Verfahren nach einem der vorhergehenden Ansprüche, wobei fehlerhafte diagnostische Hilfsetiketten (322) erkannt und ausgeschleust werden.

14. Vorrichtung zur Herstellung eines Analysebandes (110) für Flüssigkeitsproben, insbesondere Körperflüssigkeiten, insbesondere unter Verwendung eines Verfahrens nach einem der vorhergehenden Ansprüche, wobei das Analyseband (110) ein Trägerband (112) umfasst, wobei die Vorrichtung eingerichtet ist, um diagnostische Hilfsetiketten (322) auf das Trägerband (112) zu übertragen, wobei die Vorrichtung mindestens eine Vakuumwalze (940) für die Übertragung der diagnostischen Hilftetiketten (322) aufweist, wobei die Vorrichtung mindestens einen ersten Sensor (960) zum Detektieren der diagnostischen Hilfsetiketten (322) auf der Vakuumwalze (940) aufweist, wobei die Vorrichtung weiterhin mindestens einen zweiten Sensor (962) zum Detektieren einer Bandposition des Trägerbands (112) aufweist, wobei die Vorrichtung eingerichtet ist, um die Übertragung der Hilfsetiketten (322) auf das Trägerband (112) entsprechend der detektierten Hilfsetiketten (322) und der Bandposition durchzuführen, wobei die Vorrichtung eingerichtet ist, um die diagnostischen Hilfsetiketten (322) mittels eines Laminatantriebs (930), welcher ein Laminatband (310) antreibt, der Vakuumwalze (940) zuzuführen, wobei die Vorrichtung weiterhin eingerichtet ist, um die diagnostischen Hilfsetiketten (322) von dem Laminatband (310) auf die Vakuumwalze (940) zu übertragen, wobei die Vakuumwalze (940) von mindestens einem Vakuumwalzenantrieb (944) angetrieben wird, wobei die Vorrichtung mindestens einen ersten Sensor (960) aufweist, um eine Position und/oder Ausrichtung mindestens eines der diagnostischen Hilfsetiketten (322) auf der Vakuumwalze (940) zu detektieren, wobei das Trägerband (112) von mindestens einem Trägerantrieb (914) angetrieben wird, wobei die Vorrichtung mindestens einen zweiten Sensor (962) aufweist, um mindestens eine Referenzmarke (508) auf dem Trägerband (112) zu detektieren, wobei die Vorrichtung derart eingerichtet ist, dass zumindest der Vakuumwalzenantrieb (944) und der Trägerantrieb (914) synchronisiert werden.

## Claims

1. Method for producing an analysis tape (110) for fluid samples, in particular body fluids, wherein the analysis tape (110) comprises a carrier tape (112), wherein diagnostic auxiliary labels (322) are transferred to the carrier tape (112), wherein at least one vacuum roller (940) is used for the transfer of the diagnostic auxiliary labels (322), wherein the diagnostic auxiliary labels (322) are detected on the vacuum roller (940), wherein at least one tape position of the carrier tape (112) is furthermore detected, wherein the transfer of the auxiliary labels (322) to the carrier tape (112) is effected in accordance with the detected auxiliary labels (322) and the tape position, wherein the diagnostic auxiliary labels (322) are supplied to the vacuum roller (940) by means of a laminate drive (930), which drives a laminate tape (310), wherein the diagnostic auxiliary labels (322) are transferred from the laminate tape (310) to the vacuum roller (940), wherein the vacuum roller (940) is driven by at least one vacuum roller drive (944), wherein at least one first sensor (960) is used in order to detect a position and/or orientation of at least one of the diagnostic auxiliary labels (322) on the vacuum roller (940), wherein the carrier tape (112) is driven by at least one carrier drive (914), wherein at least one second sensor (962) is used in order to detect at least one reference mark (508) on the carrier tape (112), wherein at least the vacuum roller drive (944) and the carrier drive (914) are synchronized.

2. Method according to the preceding claim, wherein the diagnostic auxiliary labels (322) are provided by supplying a laminate tape (310) having at least one laminate carrier tape (312) and at least one diagnostic functional layer (318), wherein the diagnostic functional layer (318) is cut in such a way that the diagnostic auxiliary labels (322) arise.

3. Method according to the preceding claim, wherein the diagnostic functional layer (318) is cut before the auxiliary labels (322) are transferred to the vacuum roller (940).

4. Method according to either of the two preceding claims, wherein the diagnostic functional layer (318) is converted into diagnostic auxiliary labels (322) in a manner substantially free of losses.

5. Method according to any of the three preceding claims, wherein the diagnostic auxiliary labels (322) are cut at a distance of between 0.05 m and 1.0 m, in particular between 0.1 m and 0.5 m, and particularly preferably at 0.3 m, before the auxiliary labels (322) are transferred to the vacuum roller (940).

6. Method according to any of the four preceding claims, wherein the diagnostic auxiliary labels (322) are cut using a laser cutting process, in particular using a CO₂ laser.

7. Method according to any of the preceding claims, wherein the diagnostic auxiliary labels (322) are transferred to the vacuum roller (940) at at least one dispensing edge (938).

8. Method according to any of the preceding claims, wherein at least one control loop (948) is used, wherein the control loop (948) controls the vacuum roller drive (944) and the carrier drive (914) taking account of the position and/or the orientation of the diagnostic auxiliary label (322) on the vacuum roller (940) and the position of the reference mark (508) in such a way that the diagnostic auxiliary labels (322) are transferred to the carrier tape (112) in desired positions (323).

9. Method according to any of the preceding claims, wherein the control loop (948) operates the laminate drive (930) in a fixed drive ratio, in particular a fixed rotation ratio, with respect to the carrier drive (914).

10. Method according to any of the preceding claims, wherein the control loop (948) uses a virtual axis (922), to which a calculation of the control loop (948) is referred, wherein the virtual axis (922) preferably coincides with an axis (920) of the carrier drive (914).

11. Method according to any of the preceding claims, wherein the second sensor (962) comprises at least one first sub-sensor (966) and at least one second sub-sensor (968), wherein the first sub-sensor (966) and the second sub-sensor (968) are designed to detect different types of reference marks (508) on the carrier tape (112).

12. Method according to any of the preceding claims, wherein in each case exactly one diagnostic auxiliary label (322) is applied simultaneously on the vacuum roller (940).

13. Method according to any of the preceding claims, wherein defective diagnostic auxiliary labels (322) are identified and discharged.

14. Device for producing an analysis tape (110) for fluid samples, in particular body fluids, in particular using a method according to any of the preceding claims, wherein the analysis tape (110) comprises a carrier tape (112), wherein the device is designed to transfer diagnostic auxiliary labels (322) to a carrier tape (112), wherein the device has at least one vacuum roller (940) for the transfer of the diagnostic auxiliary labels (322), wherein the device has at least one first sensor (960) for detecting the diagnostic auxiliary labels (322) on the vacuum roller (940), wherein the device furthermore has at least one second sensor (962) for detecting a tape position of the carrier tape (112), wherein the device is designed to carry out the transfer of the auxiliary labels (322) to the carrier tape (112) in accordance with the detected auxiliary labels (322) and the tape position, wherein the device is designed to supply the diagnostic auxiliary labels (322) to the vacuum roller (940) by means of a laminate drive (930), which drives a laminate tape (310), wherein the device is furthermore designed to transfer the diagnostic auxiliary labels (322) from the laminate tape (310) to the vacuum roller (940), wherein the vacuum roller (940) is driven by at least one vacuum roller drive (944), wherein the device has at least one first sensor (960) in order to detect a position and/or orientation of at least one of the diagnostic auxiliary labels (322) on the vacuum roller (940), wherein the carrier tape (112) is driven by at least one carrier drive (914), wherein the device has at least one second sensor (962) in order to detect at least one reference mark (508) on the carrier tape (112), wherein the device is designed in such a way that at least the vacuum roller drive (944) and the carrier drive (914) are synchronized.

## Revendications

1. Procédé de fabrication d'un ruban d'analyse (110) pour échantillons de liquides, en particulier de liquides corporels, le ruban d'analyse (110) comportant
un ruban de support (112),
des étiquettes auxiliaires de diagnostic (322) étant transférées sur le ruban de support (112),
au moins un cylindre (940) en dépression étant utilisé pour le transfert des étiquettes auxiliaires de diagnostic (322),
les étiquettes auxiliaires de diagnostic (322) présentes sur le cylindre (940) en dépression étant détectées,
au moins une position sur le ruban de support (112) étant en outre détectée,
le transfert des étiquettes auxiliaires (322) sur le ruban de support (112) s'effectuant en correspondance aux étiquettes auxiliaires (322) détectées et à leur position sur le ruban,
les étiquettes auxiliaires de diagnostic (322) étant apportées au cylindre (940) en dépression au moyen d'un entraînement (930) de stratifié qui entraîne un ruban stratifié (310),
les étiquettes auxiliaires de diagnostic (322) étant transférées depuis le ruban stratifié (310) jusque sur le cylindre (940) en dépression,
le cylindre (940) en dépression étant entraîné par au moins un entraînement (944) de cylindre en dépression,
au moins un premier détecteur (960) étant utilisé pour détecter la position et/ou l'orientation d'au moins l'une des étiquettes auxiliaires de diagnostic (322) sur le cylindre (940) en dépression,
le ruban de support (112) étant entraîné par au moins un entraînement de support (914),
au moins un deuxième détecteur (962) étant utilisé pour détecter au moins un repère de référence (508) sur le ruban de support (112) et
au moins l'entraînement (944) du cylindre en dépression et l'entraînement de support (914) étant synchronisés.

2. Procédé selon la revendication précédente, dans lequel les étiquettes auxiliaires de diagnostic (322) sont préparées en amenant un ruban stratifié (310) qui présente au moins un ruban (312) de support de stratifié et au moins une couche fonctionnelle de diagnostic (318), la couche fonctionnelle de diagnostic (318) étant découpée de manière à former les étiquettes auxiliaires de diagnostic (322).

3. Procédé selon la revendication précédente, dans lequel la découpe de la couche fonctionnelle de diagnostic (318) a lieu avant le transfert des étiquettes auxiliaires (322) sur le cylindre (940) en dépression.

4. Procédé selon l'une des deux revendications qui précèdent, dans lequel la couche fonctionnelle de diagnostic (318) est convertie en étiquettes auxiliaires de diagnostic (322) essentiellement sans pertes.

5. Procédé selon l'une des trois revendications qui précèdent, dans lequel la découpe des étiquettes auxiliaires de diagnostic (322) s'effectue à une distance comprise entre 0,05 m et 1,0 m, en particulier entre 0,1 m et 0,5 m et de façon particulièrement préférable à 0,3 m en amont du transfert des étiquettes auxiliaires (322) sur le cylindre (940) en dépression.

6. Procédé selon l'une des quatre revendications qui précèdent, dans lequel la découpe des étiquettes auxiliaires de diagnostic (322) s'effectue en recourant à une opération de découpe au laser et en particulier en utilisant un laser au CO₂.

7. Procédé selon l'une des revendications précédentes, dans lequel les étiquettes auxiliaires de diagnostic (322) sont transférées sur le cylindre (940) en dépression sur au moins un champ d'amenée (938).

8. Procédé selon l'une des revendications précédentes, dans lequel au moins une boucle de régulation (948) est utilisée, la boucle de régulation (948) régulant l'entraînement (944) du cylindre en dépression et l'entraînement du support (914) en tenant compte de la position et/ou de l'orientation de l'étiquette auxiliaire de diagnostic (322) sur le cylindre (940) en dépression et de la position des repères de référence (508), de telle sorte que les étiquettes auxiliaires de diagnostic (322) soient transférées sur le ruban de support (112) en des positions de consigne (323).

9. Procédé selon l'une des revendications précédentes, dans lequel la boucle de régulation (948) entraîne l'entraînement (930) du stratifié dans un rapport d'entraînement fixe et en particulier un rapport de rotation fixe par rapport à l'entraînement (914) du support.

10. Procédé selon l'une des revendications précédentes, dans lequel la boucle de régulation (948) utilise un axe virtuel (922) auquel un calcul de la boucle de régulation (948) se réfère, l'axe virtuel (922) coïncidant de préférence avec un axe (920) de l'entraînement (914) du support.

11. Procédé selon l'une des revendications précédentes, dans lequel le deuxième détecteur (962) comporte au moins un premier détecteur partiel (966) et au moins un deuxième détecteur partiel (968), le premier détecteur partiel (966) et le deuxième détecteur partiel (968) étant conçus pour détecter différents types de repères de référence (508) sur le ruban de support (112).

12. Procédé selon l'une des revendications précédentes, dans lequel exactement une étiquette auxiliaire de diagnostic (322) est appliquée simultanément sur le cylindre (940) en dépression.

13. Procédé selon l'une des revendications précédentes, dans lequel les étiquettes auxiliaires de diagnostic (322) défectueuses sont détectées et exclues.

14. Dispositif de fabrication d'un ruban d'analyse (110) pour échantillons de liquides, en particulier de liquides corporels, en particulier en recourant à un procédé selon l'une des revendications précédentes, le ruban d'analyse (110) comportant
un ruban de support (112),
le dispositif étant conçu pour transférer des étiquettes auxiliaires de diagnostic (322) sur le ruban de support (112),
le dispositif présentant au moins un cylindre (940) en dépression servant à transférer les étiquettes auxiliaires de diagnostic (322),
le dispositif présentant au moins un premier détecteur (960) qui détecte les étiquettes auxiliaires de diagnostic (322) sur le cylindre (940) en dépression,
le dispositif présentant en outre au moins un deuxième détecteur (962) qui détecte une position sur le ruban de support (112),
le dispositif étant conçu pour exécuter le transfert des étiquettes auxiliaires (322) sur le ruban de support (112) en correspondance aux étiquettes auxiliaires (322) détectées et à leur position sur le ruban,
le dispositif étant conçu pour apporter au cylindre (940) en dépression les étiquettes auxiliaires de diagnostic (322) au moyen d'un entraînement (930) de stratifié qui entraîne un ruban stratifié (310),
le dispositif étant en outre conçu pour transférer les étiquettes auxiliaires de diagnostic (322) depuis le ruban stratifié (310) jusque sur le cylindre (940) en dépression,
le cylindre (940) en dépression étant entraîné par au moins un entraînement (944) de cylindre en dépression,
le dispositif présentant au moins un premier détecteur (960) qui détecte la position et/ou l'orientation d'au moins l'une des étiquettes auxiliaires de diagnostic (322) sur le cylindre (940) en dépression,
le ruban de support (112) étant entraîné par au moins un entraînement de support (914),
le dispositif présentant au moins un deuxième détecteur (962) qui détecte au moins un repère de référence (508) sur le ruban de support (112) et
le dispositif étant conçu de manière à ce qu'au moins l'entraînement (944) du cylindre en dépression et l'entraînement (914) du support soient synchronisés.
